# EUROPEAN PATENT APPLICATION

(11) **EP 1 300 435 A1**
(43) Date of publication of application: **09.04.2003**
(21) Application number: 01947901.3
(22) Date of filing: 06.07.2001
(51) Int. Cl.: C08J 3/02, C08J 5/18, C08G 81/02, C08L 29/04, C08L 101/00, D01F 1/10, D01F 6/50

(54) **ULTRAFINE METAL PARTICLE/POLYMER HYBRID MATERIAL**

(30) Priority: 07.07.2000 JP 2000206647
(71) Applicant: Sato, Shizuko, Tsushima-shi, Aichi 496-0834 (JP)
(72) Inventor: Sato, Shizuko, Tsushima-shi, Aichi 496-0834 (JP)
(74) Representative: HOFFMANN - EITLE
(86) International application number: JP0105903
(87) International publication number: WO02010262

(57) **Abstract**

A process for producing an ultrafine metal particle/polymer hybrid material (inorganic/organic hybrid material or functional polymeric material) from a polymer and ultrafine metal particles (nanoparticles of a metal). The hybrid material is applicable in various fields of nanotechnology, can be in various forms (solution, gel, and thin film), and performs specific functions. The invention further relates to explications and interpretations of the mechanism of its formation and the structure and properties (functions, behaviors, phenomena, etc.). It furthermore relates to the fact that the process for producing an ultrafine metal particle/polymer hybrid material and the explications and interpretations of the mechanism of its formation and of the structure and properties thereof apply not only under gravity but also microgravity and non-gravity.

## Description

### Technical Field

The present invention relates to an ultrafine metal particle/polymer hybrid material (inorganic/organic hybrid material or functional polymeric material) prepared by use, as raw materials, a polymer and ultrafine metal particles (nanoparticles of a metal), the hybrid material being applicable in various fields of nanotechnology, taking various forms (solution, gel, and thin film), and exhibiting specific functions. The invention further relates to the mechanism of its formation; explications and interpretations of the structure and properties (functions, behaviors, phenomena, etc.); and the fact that the process for producing the ultrafine metal particle/polymer hybrid material, the mechanism of its formation, and explications and interpretations of the structure and properties thereof apply not only under conditions under gravity, but under microgravity and non-gravity (in space).

### Background Art

Due to increased surface area and quantum effect, ultrafine metal particles of nanometer size, each particle being very small in size, exhibit peculiar physical phenomena never experienced in our daily life, and thus have been taken a great interest as one kind of new materials. In particular, ultrafine metal or metal oxide particles composed of aggregated transition metal atoms or transition metal oxide molecules exhibit not only electrical and thermal conductivity and other properties unique to metals but also non-linearity of light, catalytic effect, and disinfecting and bactericidal effect, and accordingly, have found broad range of applications in a variety of fields including electronic/electric materials, optical materials, ceramics (ceramic industry), catalysts, medical science, pharmaceutical sciences, medical care, sanitary goods, agricultural chemicals, and food packaging. Meanwhile, ultrafine alloy-forming complex metal particles or ultrafine alloy-forming complex metal oxide particles, the particles being composed of the aggregation of two or more transition metal atoms or the aggregation of two or more transition metal oxide molecules, strongly exhibit properties of ultrafine metal particles of respective metal species, and in addition, develop completely new physical phenomena, and thus are expected to serve as materials for providing extremely minutely small devices in the fields of catalysts, medical science, pharmaceutical sciences, electric and electronic science, magnetism, and optics.

Conventional ultrafine metal particles or ultrafine complex metal oxide particles (i.e., ultrafine particles of alloy- or solid-solution-forming complex metals or complex metal oxides thereof composed of the aggregation of two or more transition metal atoms or the aggregation of two or more transition metal oxide molecules) (as used herein, these are collectively referred to as "ultrafine metal particles") have been produced by either of the following two processes: (1) a method in which metal or metal oxide in solid form is physically swashed, and (2) metal ions are reduced to metal atoms, or oxidized to metal oxide molecules, for inducing aggregation of the atoms or molecules. The process mentioned in (1) is performed by use of a large-scale, specially designed apparatus, requiring enormous cost. The process mentioned in (2) can yield ultrafine metal particles or ultrafine complex metal particles dispersing in water (this form of the particles are usually referred to as "colloidal metal"). This process has the following disadvantages among others. In order to maintain colloidal metal in water for a prolonged period of time, the ultrafine-metal-particle content must be made low, and appropriate protective agents, such as proteins, polymers, or surfactants, must be added to the colloidal solution. Thus, since the medium of the colloidal metal is water, and a protein, a polymer, or a surfactant is added thereto, obtaining a concentrated colloidal metal solution is very difficult and almost impossible. Moreover, in the case where complex ultrafine metal particles, as a variant of ultrafine metal particles, are desired to be produced, the process must be performed step by step, including heating at some intermediate point in the process, and moreover, the process tends to produce cohesion and precipitation. Thus, the process (2) is almost impossible to perform the production of ultrafine metal particles.

In view of the foregoing, the present inventor previously reported a method for producing ultrafine metal particles in which transition metal ions and a nonionic surfactant having an ethylene group and/or an acetylene group are caused to react in a solution or in a polymer matrix (water-insoluble polymer film) (Japanese Patent Application Laid-Open (*kokai*) No. 11-241107).

In consideration of application of ultrafine metal particles to diversified technical fields including electric/electronic industry, chemical industry, ceramic industry, catalysts, medical science, pharmaceutical sciences, medical care, sanitary goods, agricultural chemicals, and food packaging, however, demand still exists for provision of ultrafine metal particle/polymer hybrid materials (inorganic/organic hybrid materials, functional polymer materials) which exhibit peculiar functions when ultrafine metal particles are dispersed in an organic material such as a polymer. To meet such a demand, the following requirements have been recognized: provision of pure (containing almost no impurities) ultrafine metal particles of uniform size having a variety of forms (for example, spherical, rod-like, ellipsoid, X-shaped, and Y-shaped) in various states in a polymer medium (such as solution, powder, gel, thin film, membrane, crystal, or solid) (for example, the particles may be dispersed, carried, or immobilized within the medium; adsorbed or adhered on the surfaces of the medium, or the medium is coated with the particles); explication and interpretation of the mechanism of formation of these ultrafine metal particle/polymer hybrid materials and the structure and properties (functions, behaviors, phenomena, etc.) thereof; and verification of the facts that the mentioned process for producing these ultrafine metal particle/polymer hybrid materials, and explication and interpretation of the mechanism of formation of these ultrafine metal particle/polymer hybrid materials and the structure and properties (functions, behaviors, phenomena, etc.) thereof hold not only under gravity but also microgravity and non-gravity (in space).

### Disclosure of the Invention

The present inventor has carried out extensive studies in order to solve the aforementioned problems, and has found that, on the basis of a method for forming ultrafine metal particles from one type or two or more types of transition metal ions and a nonionic surfactant having an ethylene group and/or an acetylene group in water or an organic solvent, when a transition metal ion is reacted with a nonionic surfactant in a polymer solution, there can be formed forming an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film; that a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film can be obtained by heating the formed ultrafine-metal-particle-dispersed polymer solution; that an ultrafine-metal-particle-dispersed polymer thin film or an ultrafine-metal-particle-dispersed polymer gel thin film can be obtained by reacting a transition metal ion with a nonionic surfactant in the presence of a polymer; that a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film can be obtained by mixing a polymer solution and at least two or more types of ultrafine-metal-particle solutions which have been prepared through reaction of a transition metal ion and a nonionic surfactant and heating the resultant mixture; that a concentrated ultrafine-metal-particle polymer solution, an ultrafine-metal-particle-dispersed polymer gel, an ultrafine-metal-particle-dispersed polymer thin film, or an ultrafine-metal-particle-dispersed polymer gel thin film can be obtained by mixing a polymer solution and an ultrafine-metal-particle solution which has been prepared through reaction of at least two or more types of transition metal ions and a nonionic surfactant and heating the resultant mixture; that an ultrafine-metal-particle-dispersed polymer thin film or an ultrafine-metal-particle-dispersed polymer gel thin film in which ultrafine metal particles are dispersed on the surface and/or the interior of the film can be obtained by reacting a transition metal ion and an nonionic surfactant in a solvent (water, an organic compound, or a water-organic compound mixture) in the presence of a polymer thin film or a polymer gel thin film; that an ultrafine-metal-particle-dispersed polymer thin film or an ultrafine-metal-particle-dispersed polymer gel thin film in which ultrafine metal particles are dispersed on a surface and/or the inside of the film can be obtained by placing a polymer thin film or a polymer gel thin film in an ultrafine metal particulate solution (solvent: water, an organic compound, or a water-organic compound mixture) which has been prepared by reacting a transition metal ion and an nonionic surfactant; that an ultrafine-metal-particle-dispersed polymer thin film or an ultrafine-metal-particle-dispersed polymer gel thin film containing ultrafine metal particles dispersed in a variety of distribution states on the surface and/or the inside of the film thereof can be obtained by counter-diffusing a transition metal ion and a nonionic surfactant from both surface sides of a polymer thin film or a polymer gel thin film into the inside of the film; that an ultrafine-metal-particle-dispersed polymer gel having micro-pores of nanometer-size which allow passage of gas such as air or liquid such as water, can be obtained by a simple method from a transition metal ion, a nonionic surfactant, and a polymer, and the mechanism of formation of the gel can be elucidated and interpreted; that an ultrafine-metal-particle-dispersed polymer gel thin film having a multilayer structure of ultrathin films having micropores and a thickness of 1 µm or less can be produced by a simple method from a transition metal ion, a nonionic surfactant, and a polymer, and the mechanism of formation of the ultrathin films, the multilayer structure and the gel can be elucidated and interpreted; that an ultrafine-metal-particle-dispersed polymer gel, an ultrafine-metal-particle-dispersed polymer thin film, or an ultrafine-metal-particle-dispersed polymer gel thin film exhibiting electric conductivity on the surface and/or the cross-section of film thereof can be obtained by a simple method from a transition metal ion, a nonionic surfactant, and a polymer; that ultrafine metal particles having a shape other than a spherical shape (e.g., rod, ellipsoid, X, and Y) can be obtained by reacting a transition metal ion with a nonionic surfactant in a polymer network (medium) having a liquid crystal structure; that an ultrafine-metal-particle-dispersed polymer gel or an ultrafine-metal-particle-dispersed polymer gel thin film swells or shrinks greatly within a short period of time by the mediation of a solvent, and the swelling and the shrinking of the gel are reversible phenomena, being interpreted; that the ultrafine-metal-particle-dispersed polymer gel or the ultrafine-metal-particle-dispersed polymer gel thin film can have a lot of water, the uptake of water by the gel or the gel film is over 50 times of the weight of the gel or the gel film; and that the formation method, formation mechanism, and elucidation and interpretation of structure and properties of all the ultrafine-metal-particle-dispersed concentrated polymer solution, ultrafine-metal-particle-dispersed polymer gel, ultrafine-metal-particle-dispersed polymer thin film, and ultrafine-metal-particle-dispersed polymer gel thin film can be established regardless of gravitation conditions; i.e., gravity, microgravity, or non-gravity (in space). The present invention has been accomplished on the basis of these findings and considerations.

Accordingly, the present invention provides the following: an ultrafine metal particle/polymer hybrid material, typically an ultrafine-metal-particle-dispersed polymer gel or an ultrafine-metal-particle-dispersed polymer gel thin film, wherein ultrafine metal particles are dispersed on the surface and/or the inside of the polymer gel or polymer gel thin film, the production of the ultrafine-metal-particle-dispersed polymer gel or the ultrafine-metal-particle-dispersed polymer gel thin film, the mechanism of the formation, and the elucidation and the interpretation of the structure and the properties (function, behavior, phenomenon, etc.); the observation and the interpretation of water-mediated swelling and shrinking of the ultrafine-metal-particle-dispersed polymer gel or the ultrafine-metal-particle-dispersed polymer gel thin film; the formation of an ultrafine-gold-particle-dispersed poly(vinyl alcohol) gel or gel thin film having a large number of ultrafine metal particles dispersed in the inside and/or on the surface of the gel or the gel film, under limited circumstances, mixing a tetrahalogenoaurate(III) ion (e.g., chloroaurate ion), an acetylene-glycol nonionic surfactant, poly(vinyl alcohol), and water and allowing the resultant mixture to stand; the formation of the ultrafine-gold-particle-dispersed poly(vinyl alcohol) gel or gel thin film at the higher temperature than the phase transition temperature correlating to the limited circumstances; the formation of the ultrafine-gold-particle-dispersed poly(vinyl alcohol) gel or gel thin film under the gradual vaporization of water correlating to the limited circumstances; the mechanism of the formation of the gel of the gel film by cross-linking (network formation) of poly(vinyl alcohol) (essential component) and polyethylene oxide (essential component) included in an acetylene-glycol nonionic surfactant in the presence of ultrafine gold particles (essential component) acting as a catalyst, under hydrophobic circumstances (phase separation of an aqueous solution occurring at the higher temperature than the phase transition temperature or drying through gradual vaporization of water from the surface of an aqueous solution); the production of the ultrafine-metal-particle-dispersed polymer gel or the ultrafine-metal-particle-dispersed polymer gel thin film in the presence of ultrafine gold-containing-alloy particles (e.g., ultrafine (gold-silver alloy) particles) formed by adding other noble metal ions (e.g., silver ion) than gold to the raw materials, exhibiting functions similar to ultrafine gold particles; the assistance of a polymer having a polyethylene oxide chain (e.g., polyethylene glycol or a nonionic surfactant) to a part of the functions of polyethylene oxide contained in an acetylene-glycol nonionic surfactant; the production of the ultrafine-metal-particle-dispersed polymer gel or the ultrafine-metal-particle-dispersed polymer gel thin film; the observation of swelling and shrinking by the mediation of water; the interpretation of the mechanism of formation and the phenomenon being established under microgravity as well as under gravity; and the formation of ultrafine gold particles of various shapes by reacting a tetrachloroaurate ion species with acetylene-glycol nonionic surfactant in a polymer thin film (matrix) having a liquid crystal structure.

### Brief Description of the Drawings

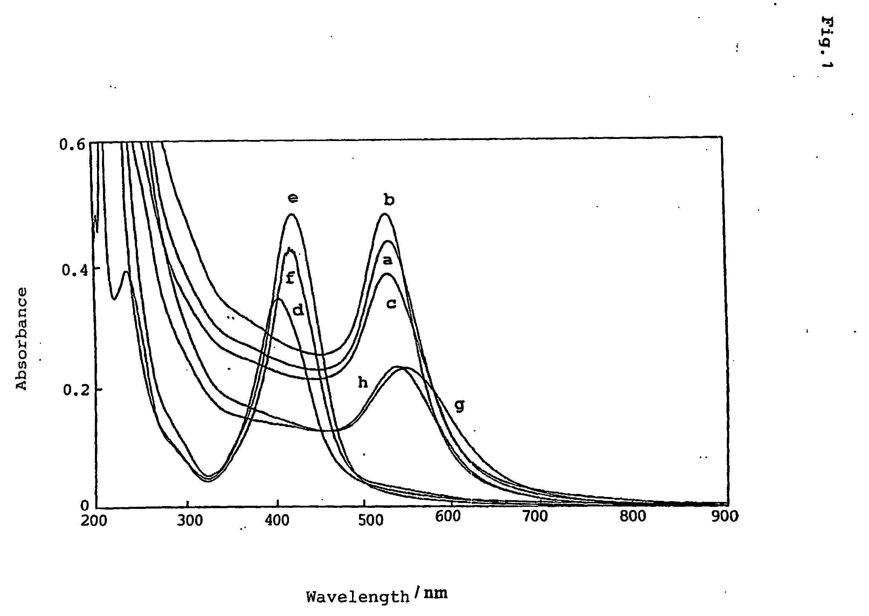

Fig. 1 includes UV-VIS absorption spectra of a colloidal gold, a colloidal silver, and a colloidal gold-silver alloy ((a): colloidal gold prepared from aqueous solutions of sodium chloroaurate and S465; (b): colloidal gold prepared from aqueous solutions of sodium chloroaurate, S465 and PVA described in Example 1; (c): colloidal gold prepared from aqueous solutions of sodium chloroaurate, S465 and HPC described in Example 22; (d): colloidal silver prepared from aqueous solutions of silver nitrate and S465; (e): colloidal silver prepared from aqueous solutions of silver nitrate, S465 and PVA described in Example 10; (f): colloidal silver prepared from aqueous solutions of silver nitrate, S465 and HPC described in Example 22; (g): colloidal gold-silver alloy prepared from aqueous solutions of sodium chloroaurate, silver nitrate, and S465; and (h): colloidal gold-silver alloy prepared from aqueous solutions of sodium chloroaurate, silver nitrate, S465 and PVA described in Example 13).

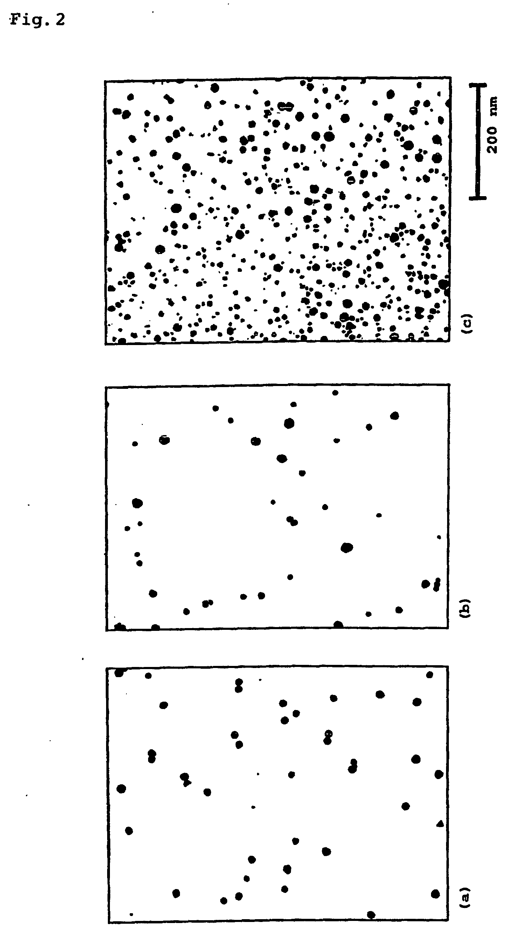

Fig. 2 includes transmission electron microscopic images of a colloidal gold, a colloidal silver, and a colloidal gold-silver alloy ((a): colloidal gold prepared from aqueous solutions of sodium chloroaurate, S465, and PVA described in Example 1; (b): colloidal silver prepared from aqueous solutions of silver nitrate, S465 and PVA described in Example 10; and (c): colloidal gold-silver alloy prepared from aqueous solutions of sodium chloroaurate, silver nitrate, S465, and PVA described in Example 13).

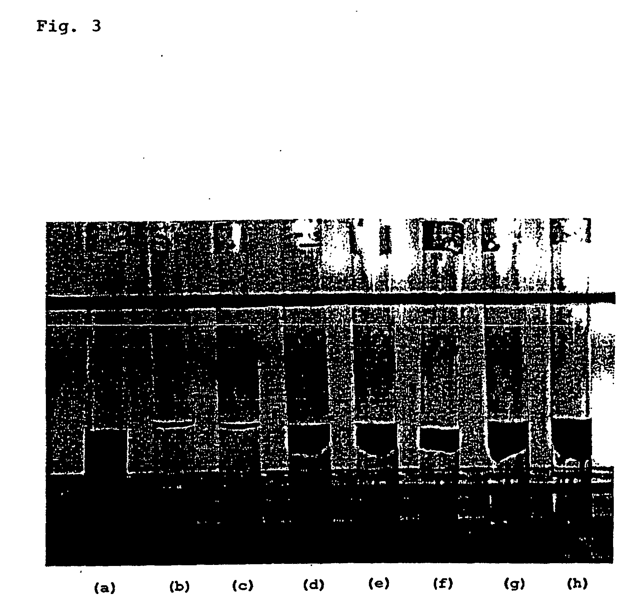

Fig. 3 includes a photograph showing colloidal gold and PVA-added colloidal gold in the test tubes allowed to stand for 20 hours in a 60°C thermostat bath described in Example 2. The colloidal gold was prepared from aqueous solutions of sodium chloroaurate and S465, and various concentrations of PVA aqueous solution were added to the colloidal gold ((a): colloidal gold; (b): PVA concentration 0; (c): 1, (d): 1.5, (e): 2, (f): 2.5, (g): 3, and (h): 4 w/w%).

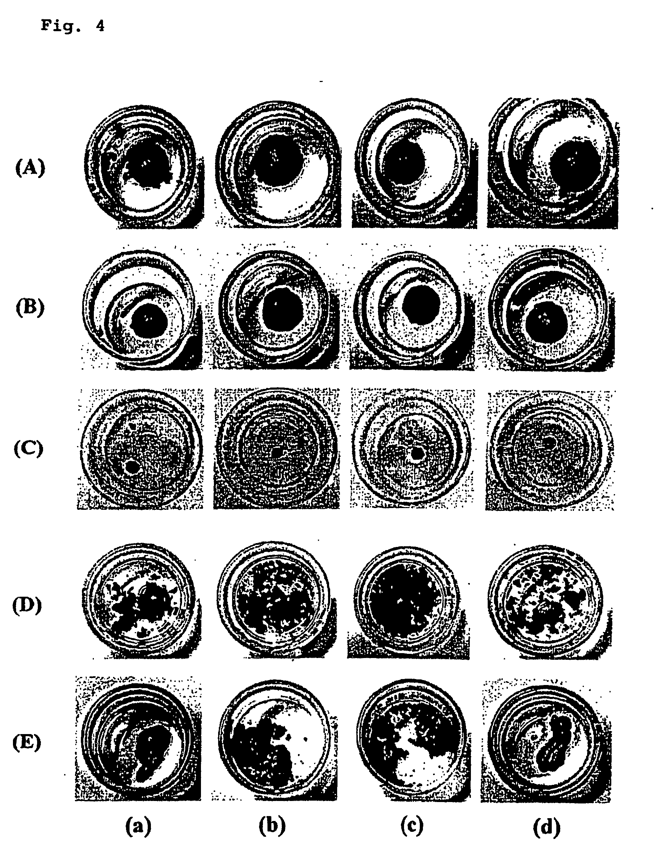

Fig. 4 includes photographs showing ultrafine-gold-particle-dispersed PVA gel and ultrafine-gold-silver-alloy-particle-dispersed PVA gel, prepared from aqueous solutions of chloroauric acid, silver nitrate, S465, and PVA described in Example 3, 4, 17, or 18 ((A): gel samples prepared by adding PVA after formation of colloidal gold or gold-silver alloy and treated with water; (B): gel samples (A) treated with acetone; (C): gel samples (B) heated at 100°C for two hours; (D): gel samples prepared by mixing all raw materials and treated with water; and (E): gel samples (D) treated with acetone, and (a), (b), (c), and (d): gel samples prepared according to the compositions shown in Table 1).

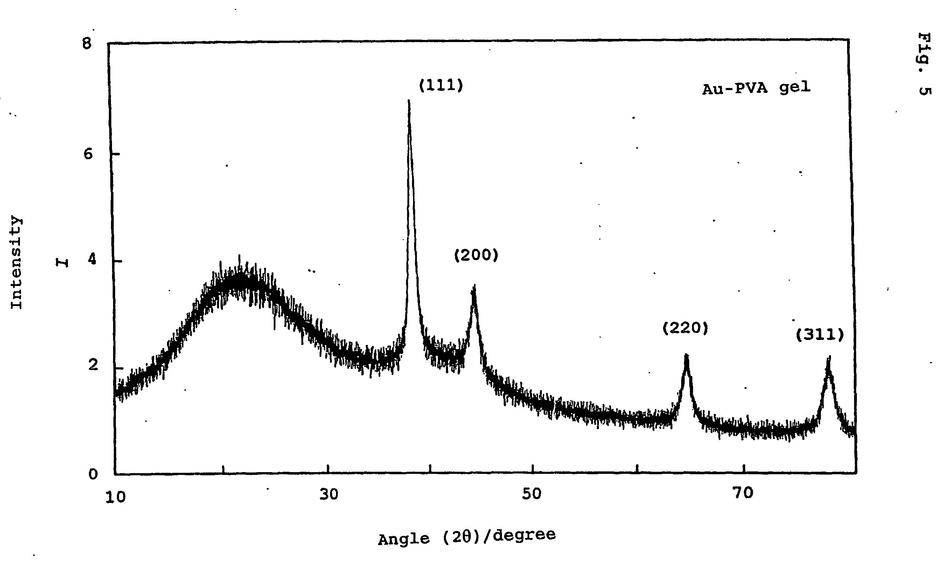

Fig. 5 includes an X-ray diffraction spectrum of ultrafine-gold-particle-dispersed PVA gel prepared from aqueous solutions of sodium chloroaurate, S465 and PVA described in Example 6.

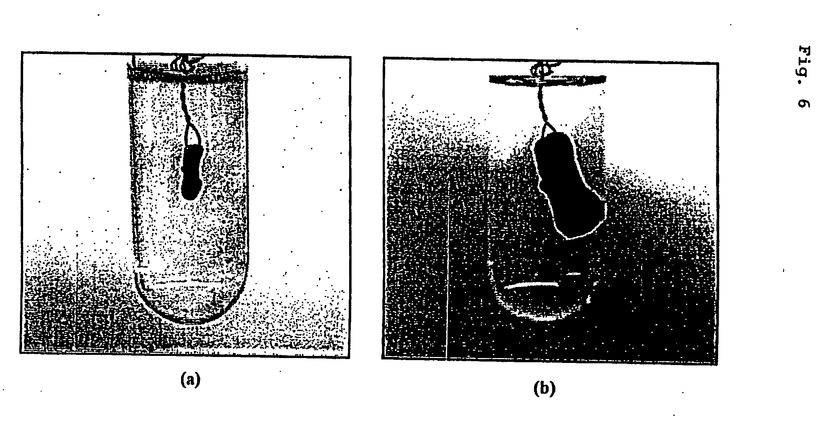

Fig. 6 includes photographs showing a water-mediated swelling feature of ultrafine-gold-particle-dispersed PVA gel of doughnut shape prepared from aqueous solutions of sodium chloroaurate, S465 and PVA described in Example 7 ((a): immediately after immersion of the gel of doughnut shape in water; and (b): six days after).

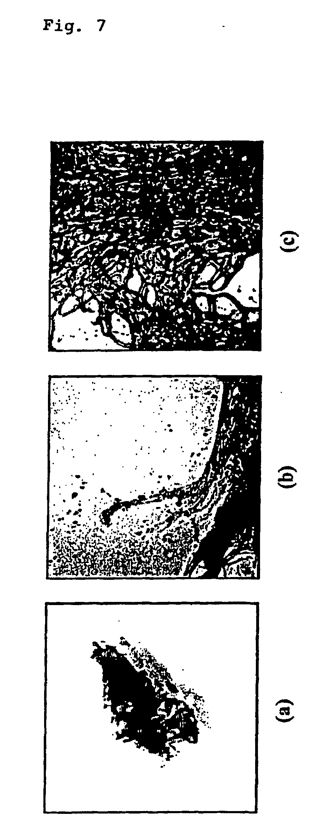

Fig. 7 includes optical microscopic photographs of the ultrafine-gold-particle-dispersed PVA gel described in Example 8 ((a): photograph of ultrafine-gold-particle-dispersed PVA gel; (b) and (c): microscopic photographs of (a)).

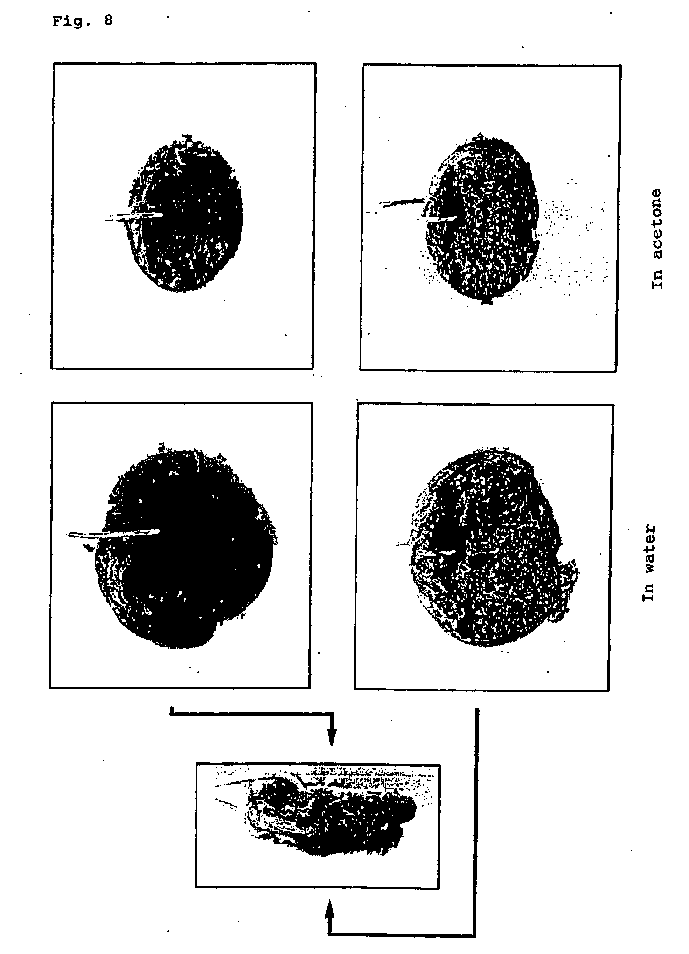

Fig. 8 includes photographs showing two surfaces of cut portions of the ultrafine-gold-particle-dispersed PVA gel described in Example 9.

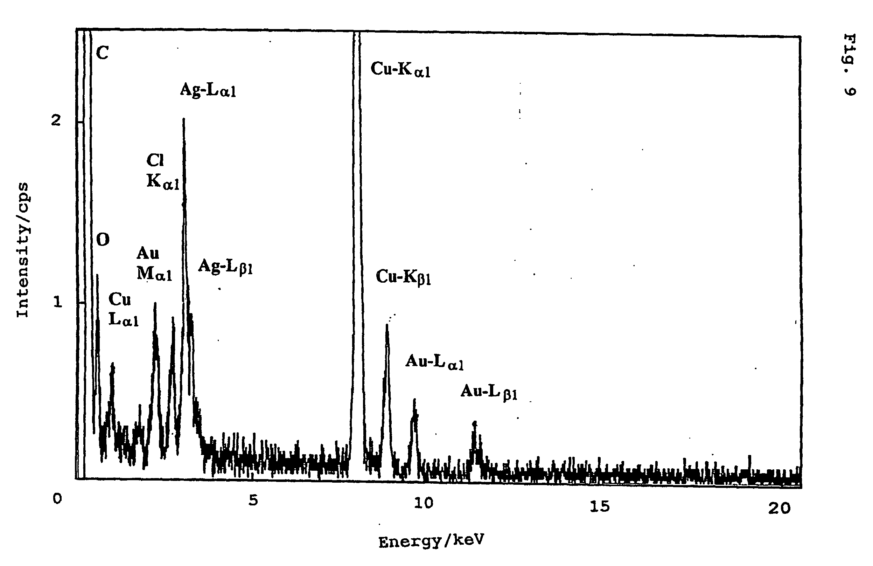

Fig. 9 includes an energy dispersive X-ray spectrum of the transmission electron microscopic image of the gold-silver alloy particle prepared from aqueous solutions of sodium chloroaurate, silver nitrate, S465 and PVA described in Example 13.

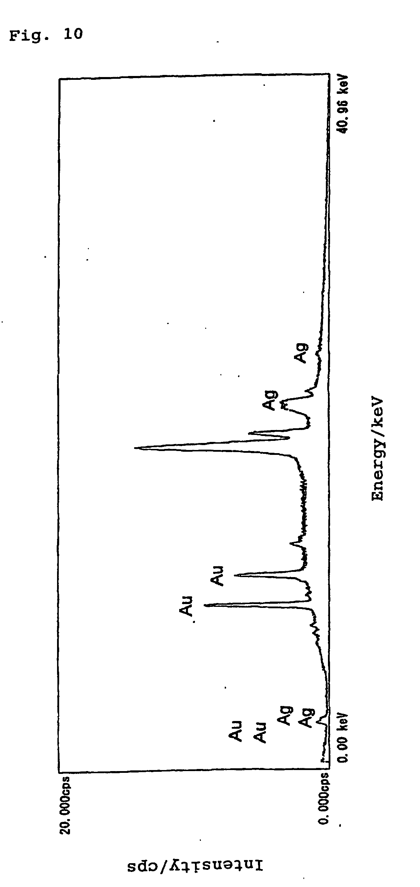

Fig. 10 includes a fluorescent X-ray spectrum of the ultrafine-gold-silver-alloy-particle-dispersed PVA gel described in Example 16.

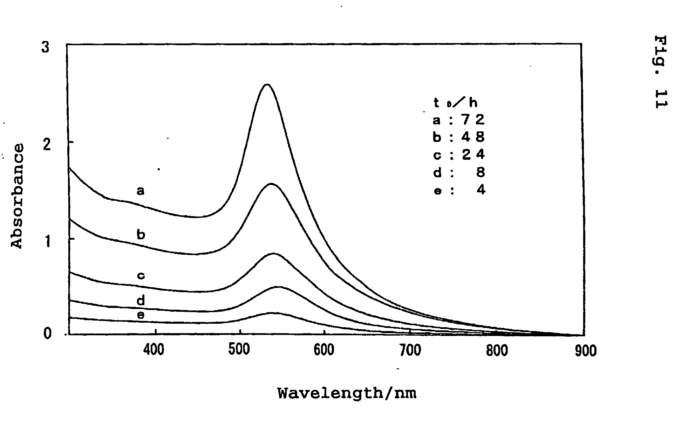

Fig. 11 includes UV-VIS absorption spectra of ultrafine-gold-particle-dispersed PVA thin film prepared through the counter-diffusion of chloroauric acid and S465 from both surface sides of the PVA thin film described in Example 23 (diffusion time, (a): 72; (b): 48; (c): 24; and (d) and (e): 4 hours).

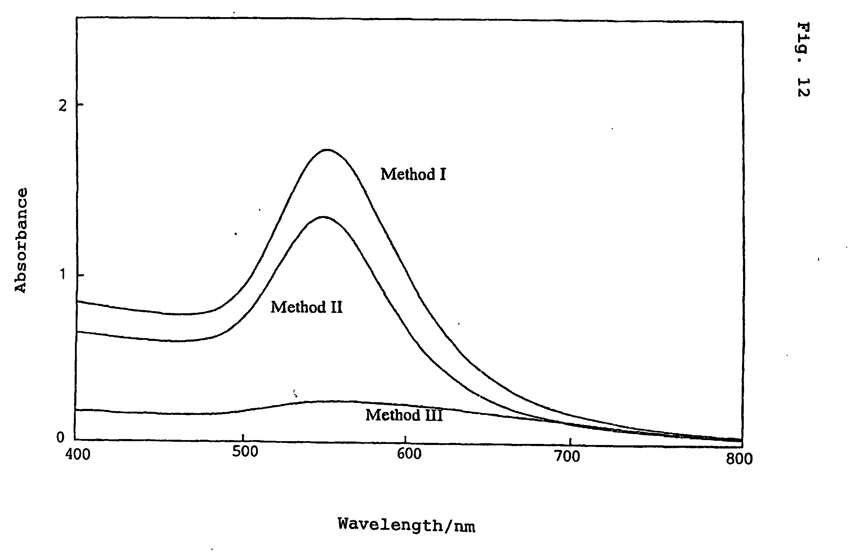

Fig. 12 includes UV-VIS absorption spectra of ultrafine-gold-particle-dispersed PVA thin films prepared in Examples 23, 29, and 32 (Method I: thin film prepared in Example 23; Method II: thin film prepared in Example 29; and Method III: thin film prepared in Example 32).

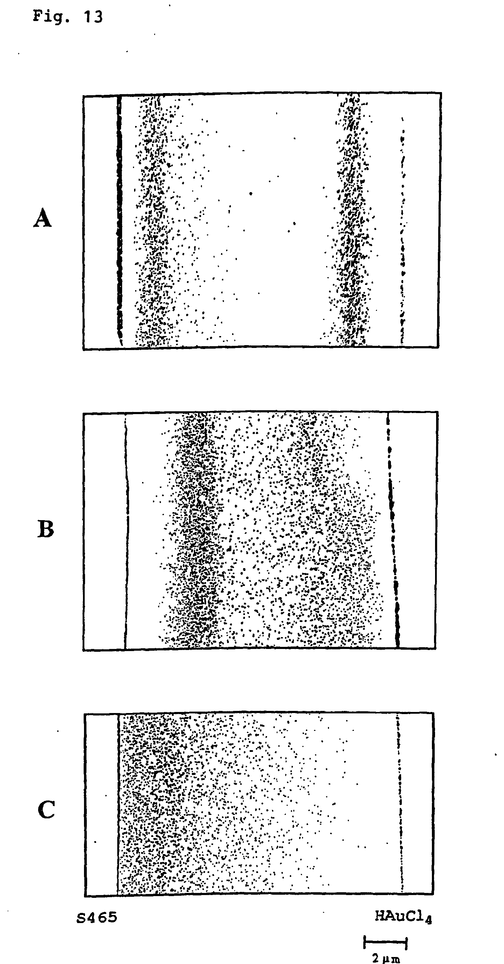

Fig. 13 includes transmission electron microscopic images of cross-sections of the ultrafine-gold-particle-dispersed PVA thin film, the thin film being prepared through counter-diffusion for 96 hours of chloroauric acid and S465 from both surface sides of the PVA thin film described in Example 24 or 28 ((A): every 12 hours, the old aqueous solution of chloroauric acid was replaced by a fresh aqueous solution of S465 and the old aqueous solution of S465 was replaced by a fresh aqueous solution of chloroauric acid; (B): every 24 hours, the old aqueous solution of chloroauric acid was replaced by a fresh aqueous solution of S465 and the old aqueous solution of S465 was replaced by a fresh aqueous solution of chloroauric acid; (C): every 24 hours, the old aqueous solutions of chloroauric acid and S465 were replaced by the fresh aqueous solutions of chloroauric acid and S465, respectively).

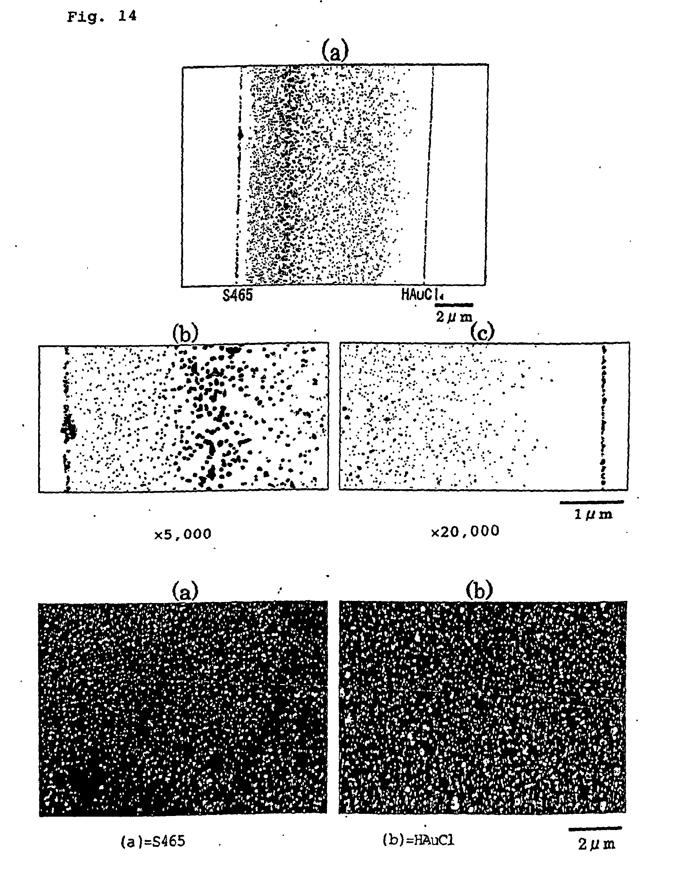

Fig. 14 includes transmission electron microscopic images of cross-sections of ultrafine-gold-particle-dispersed PVA thin film and scanning electron microscopic images of both surface sides of ultrafine-gold-particle-dispersed PVA thin film. The ultrafine-gold-particle-dispersed PVA thin film was prepared through counter-diffusion of chloroauric acid and S465 from both surface sides of the PVA thin film for 96 hours described in Example 24 or 25.

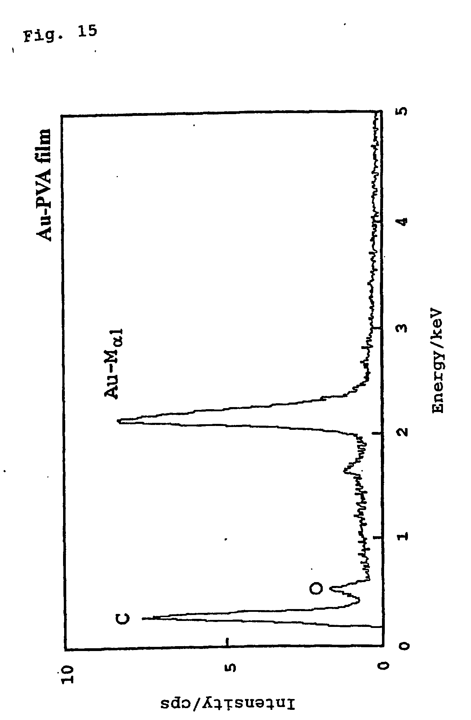

Fig. 15 includes an energy dispersive X-ray spectrum of the ultrafine-gold-particle in the scanning electron microscopic image of the S465 surface side of the ultrafine-gold-particle-dispersed PVA thin film described in Example 26.

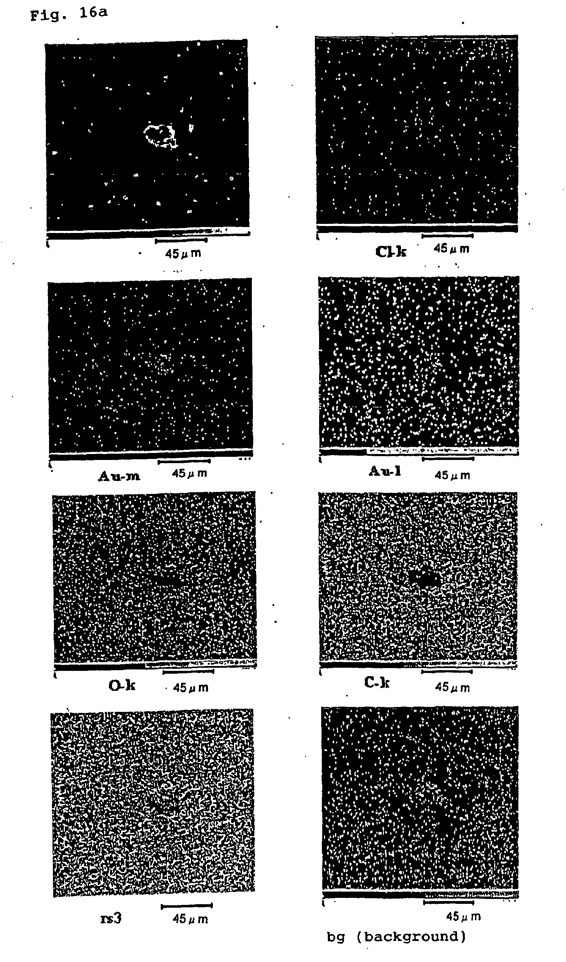

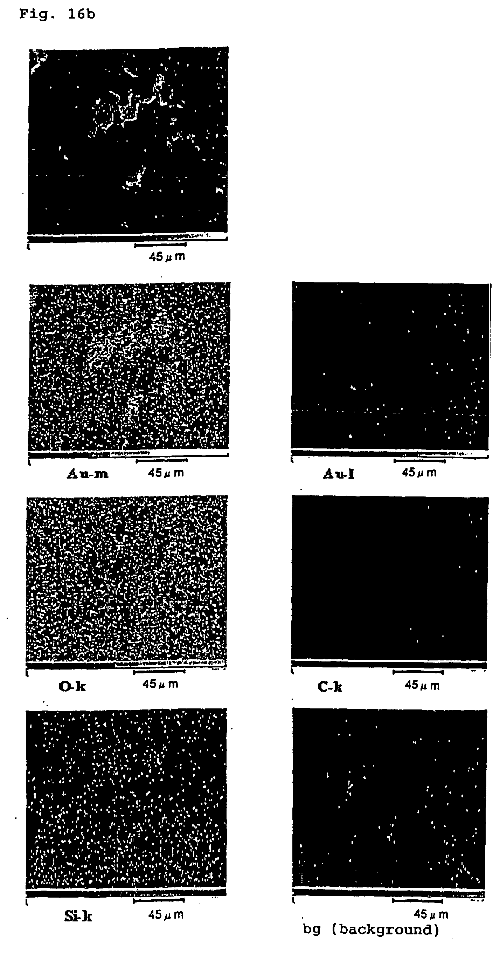

Figs. 16a and 16b includes maps of elements detected from energy dispersive X-ray spectra of the scanning electron microscopic images of both surface sides of the ultrafine-gold-particle-dispersed PVA thin film described in Example 26 (16a: S465 side; and 16b: chloroauric acid side).

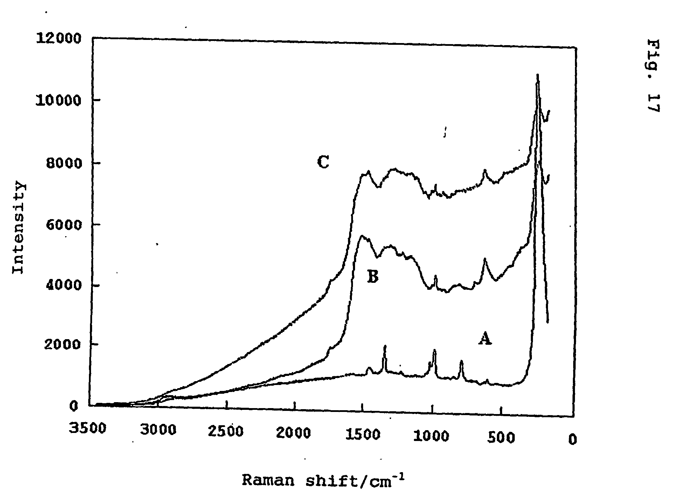

Fig. 17 includes laser Raman spectra of ultrafine-gold-particle-dispersed PVA thin film prepared through counter-diffusion of chloroauric acid and S465 from both surface sides of the PVA thin film (change of new chloroauric acid aqueous solution and new S465 aqueous solution carried out every 24 hours) for 96 hours described in Example 27 (an excitation wavelength: 785 nm, (A): ultrafine-gold-particle-dispersed gel; (B) and (C): ultrafine-gold-particle-dispersed PVA thin film; ((B): S465 side; and (C): chloroauric acid side)).

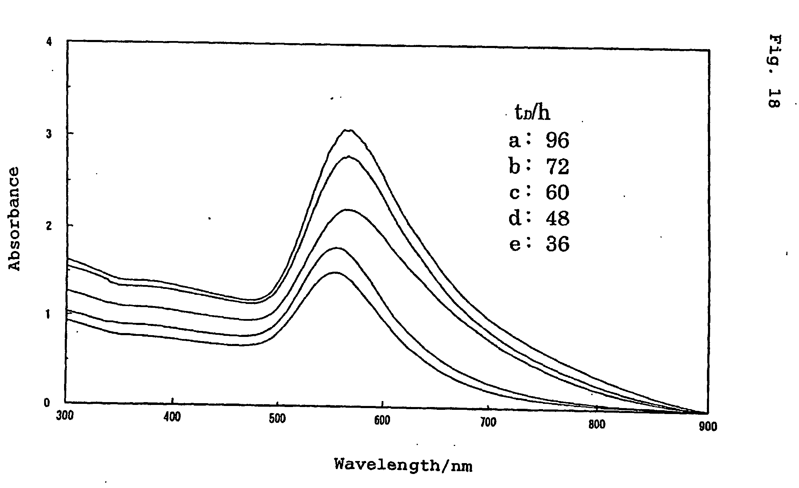

Fig. 18 includes UV-VIS absorption spectra of ultrafine-gold-particle-dispersed PVA thin film prepared through counter-diffusion of chloroauric acid and S465 from both sides of the PVA thin film (change of new chloroauric acid aqueous solution and new S465 aqueous solution carried out continuously) for 96 hours described in Example 29 (diffusion time, (a): 96; (b): 72; (c): 60; (d): 48; and (e): 36 hours).

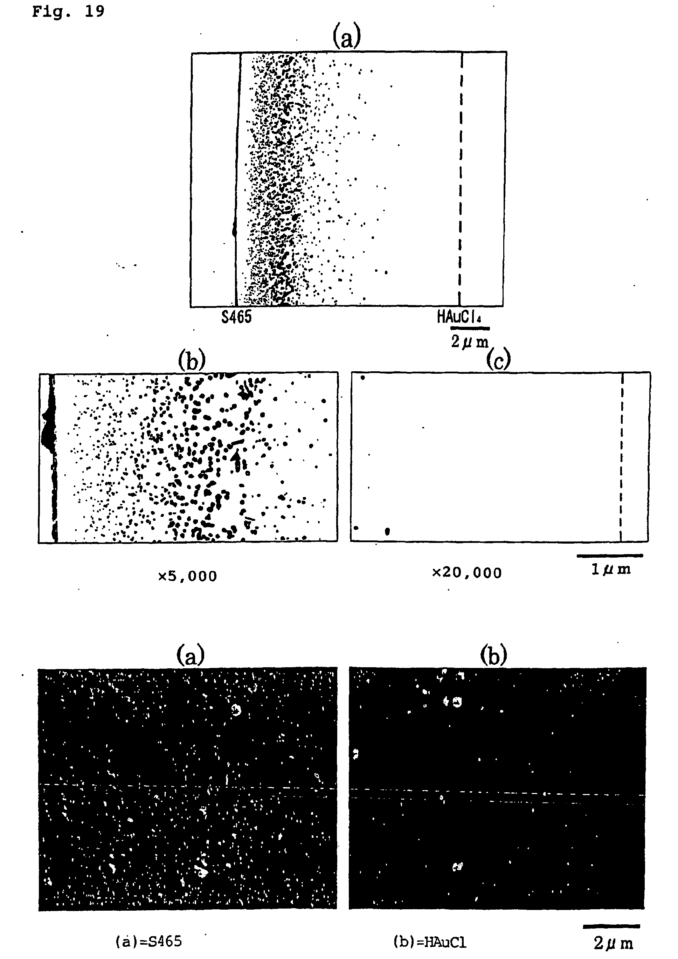

Fig. 19 includes transmission electron microscopic images of cross-sections of ultrafine-gold-particle-dispersed PVA thin film and scanning electron microscopic images of both surface sides of ultrafine-gold-particle-dispersed PVA thin film. The ultrafine-gold-particle-dispersed PVA thin film was prepared through counter-diffusion of chloroauric acid and S465 from both surface sides of the PVA thin film (a continuous supply of the fresh aqueous solutions of chloroauric acid and S465) for 96 hours described in Example 30 or 31.

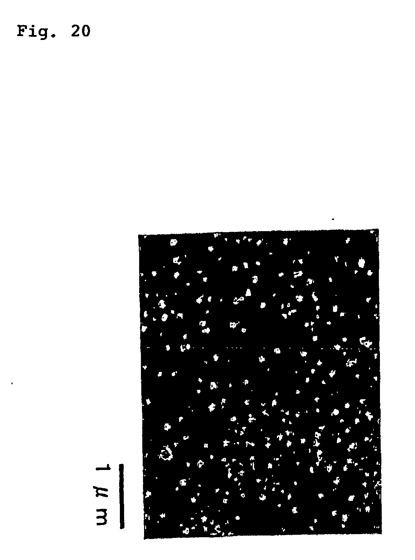

Fig. 20 includes a scanning electron microscopic image of the surface of the ultrafine-gold-particle-dispersed PVA thin film described in Example 32.

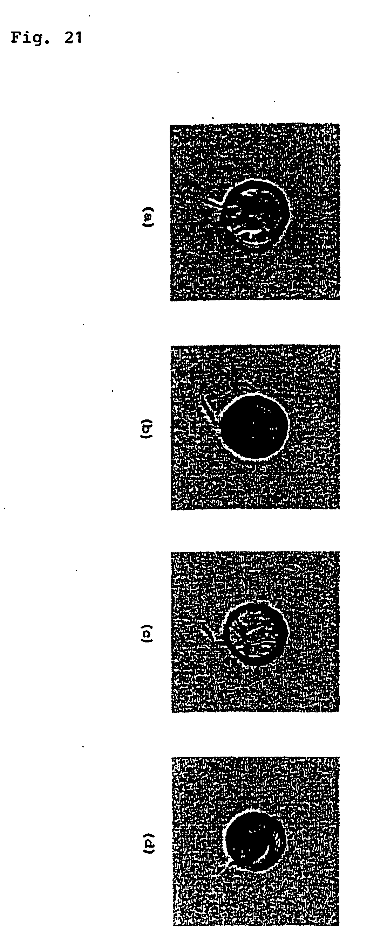

Fig. 21 includes photographs of ultrafine-gold-particle-dispersed PVA gel thin film and HPC thin film ((a): ultrafine-gold-particle-dispersed PVA gel thin film described in Example 33; (b): ultrafine-gold-particle-dispersed PVA gel thin film described in Example 35; (c): ultrafine-gold-particle-dispersed PVA gel thin film described in Example 36; and (d): ultrafine-gold-particle-dispersed HPC thin film described in Example 37).

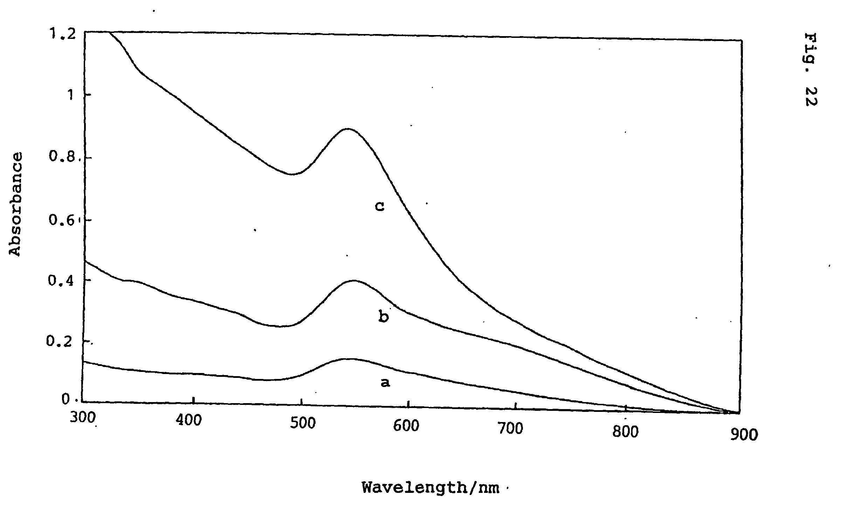

Fig. 22 includes UV-VIS absorption spectra of ultrafine-gold-particle-dispersed PVA gel thin films ((a): ultrafine-gold-particle-dispersed PVA gel thin film described in Example 33; (b): ultrafine-gold-particle-dispersed PVA gel thin film described in Example 35; and (c): ultrafine-gold-particle-dispersed PVA gel thin film described in Example 36).

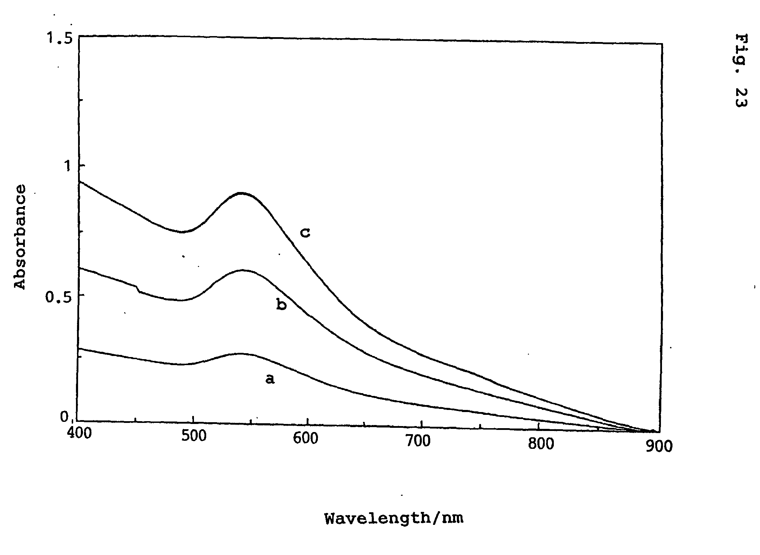

Fig. 23 includes UV-VIS absorption spectra of ultrafine-gold-silver-alloy-particle-dispersed PVA gel thin films ((a): ultrafine-gold-particle-dispersed PVA gel thin film described in Example 37; (b): ultrafine-gold-particle-dispersed PVA gel thin film described in Example 38; and (c): ultrafine-gold-particle-dispersed PVA gel thin film described in Example 39).

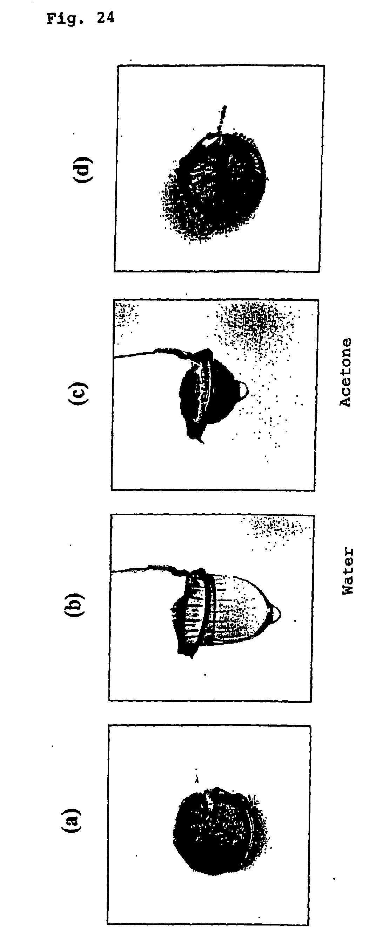

Fig. 24 includes photographs showing water-mediated swelling and shrinking of the ultrafine-gold-particle-dispersed PVA gel thin film described in Example 41 ((a): ultrafine-gold-particle-dispersed PVA gel thin film described in Example 25; (b): gel thin film (a) immersed in water and lifted up from water; (c): gel thin film (b) immersed in acetone and lifted up from acetone; and (d): acetone-removed gel thin film (c) dried on a petri dish).

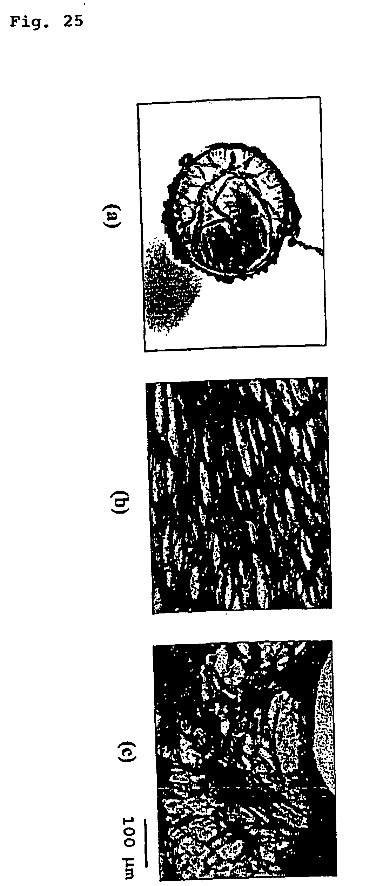

Fig. 25 includes optical microscopic photographs of the ultrafine-gold-particle-dispersed PVA gel thin film described in Example 42 ((a): photograph of the ultrafine-gold-particle-dispersed PVA gel thin film; (b) and (c): microscopic photographs of the gel thin film (a).

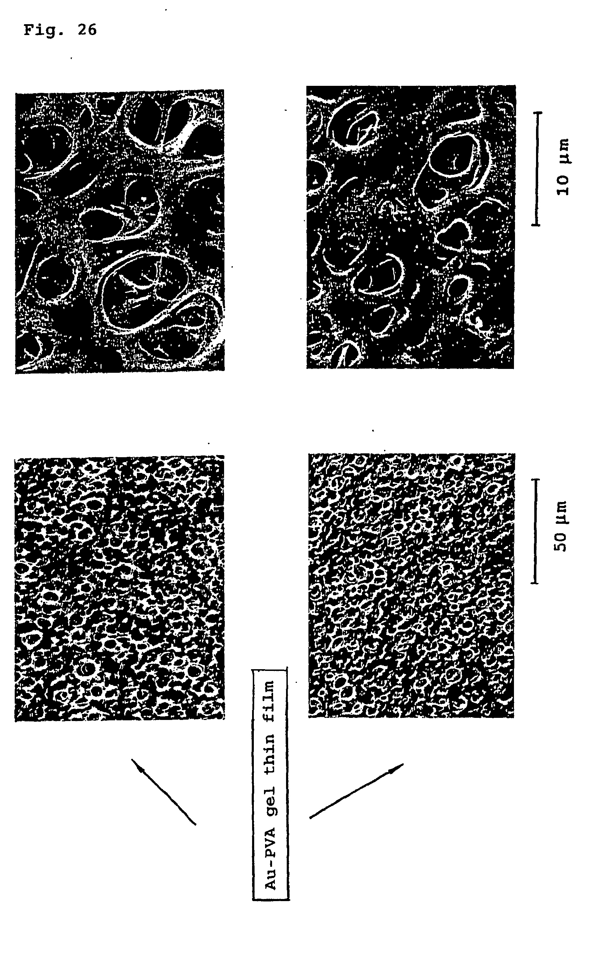

Fig. 26 includes scanning electron microscopic photographs of both surface sides of the ultrafine-gold-particle-dispersed PVA gel thin film described in Example 43. The upper photographs provide the surface of the gel thin film at the air/film interface, and the lower photographs provides the surface of the gel thin film at the film/petri dish interface. Photographs at right side and photographs at left side are different in magnification.

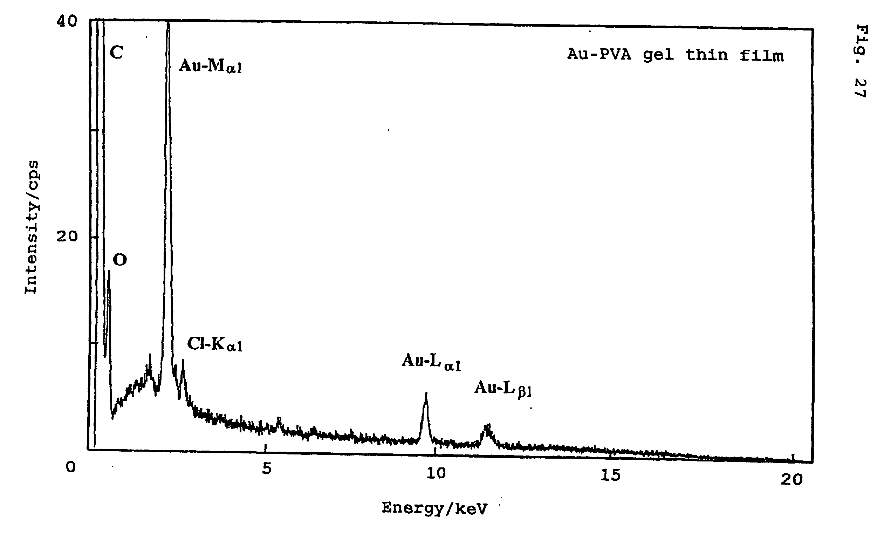

Fig. 27 includes an energy dispersive X-ray spectrum of the small white portions of scanning electron microscopic image described in Example 44.

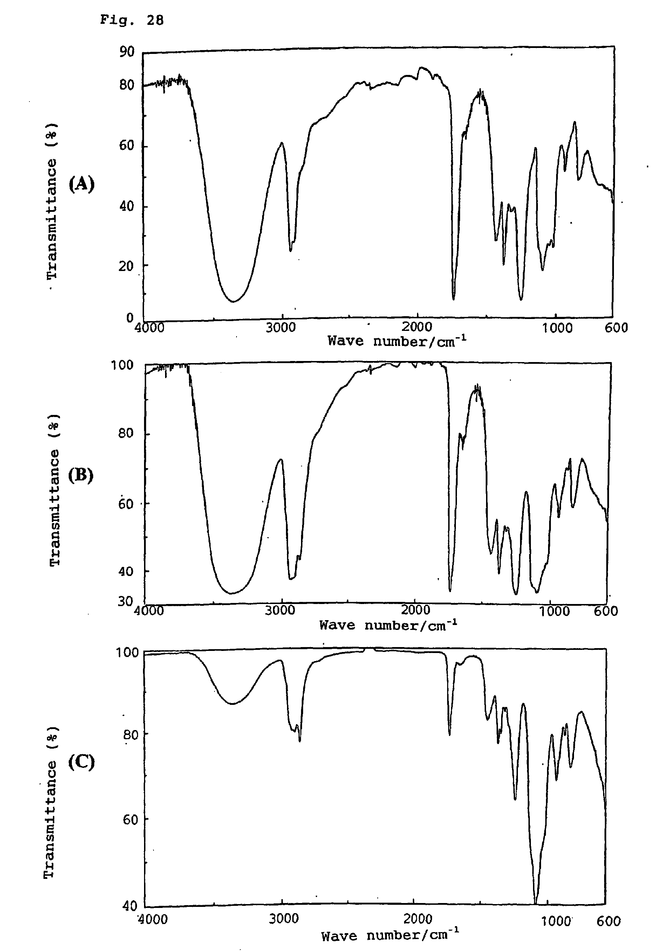

Fig. 28 includes transmission FT-IR spectra and a total reflection FT-IR spectrum of the ultrafine-gold-particle-dispersed PVA gel thin film described in Example 45 ((A): transmission FT-IR spectrum of PVA thin film; (B): transmission FT-IR spectrum of the ultrafine-gold-particle-dispersed PVA gel thin film; and (C): total reflection FT-IR spectrum of a surface of the ultrafine-gold-particle-dispersed PVA gel thin film).

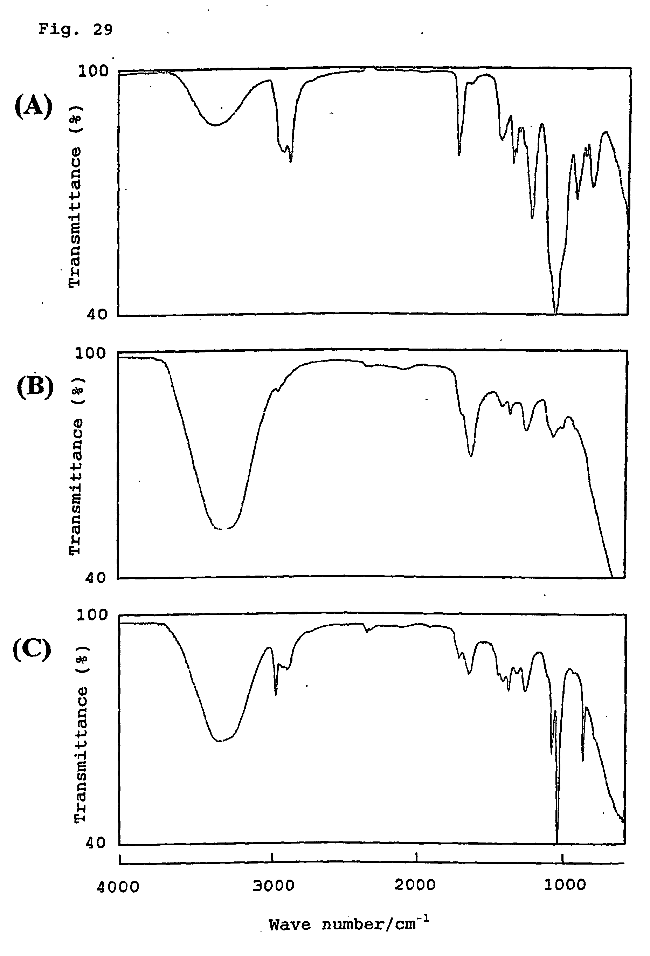

Fig. 29 includes total reflection FT-IR spectra (ATR FT-IR spectra) of the ultrafine-gold-particle-dispersed PVA gel thin film described in Example 46 ((A): dry-looking gel thin film; (B): gel thin film after immersion in water; and (C): gel thin film after immersion in ethanol).

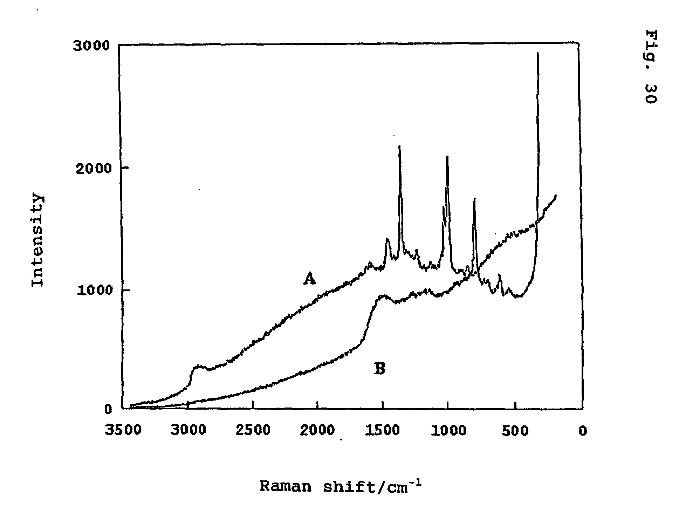

Fig. 30 includes laser Raman spectra of the ultrafine-gold-particle-dispersed PVA gel and ultrafine-gold-particle-dispersed PVA gel thin film described in Example 47 ((A): ultrafine-gold-particle-dispersed PVA gel; and (B): ultrafine-gold-particle-dispersed PVA gel thin film).

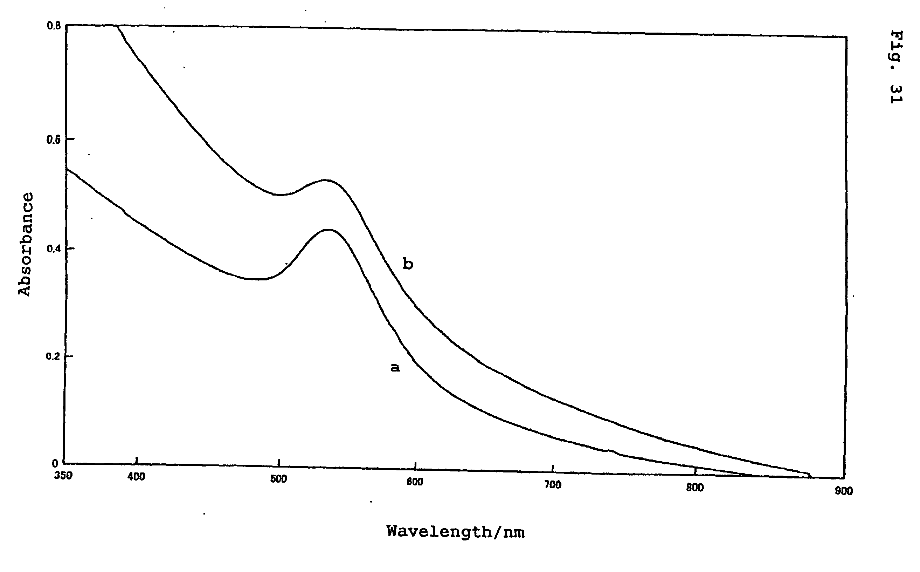

Fig. 31 includes UV-VIS absorption spectra of the ultrafine-gold-particle-dispersed PVA gel thin film described in Example 48 ((a): non-formalized; and (b): formalized).

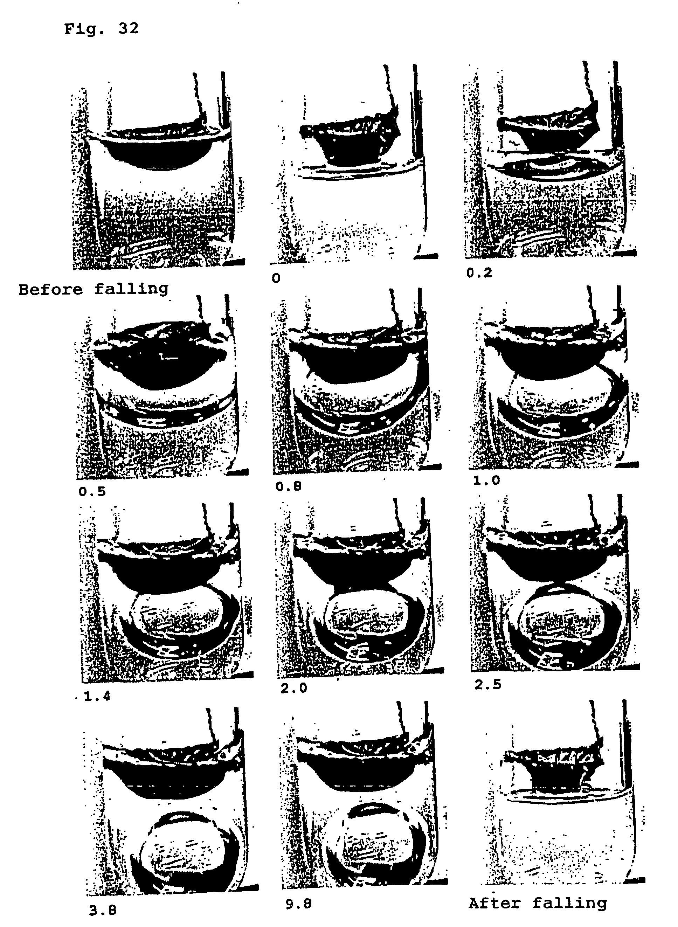

Fig. 32 includes photographs showing water-mediated swelling and shrinking of the ultrafine-gold-particle-dispersed PVA gel thin film described in Example 49 observed during falling for a short period of time under microgravity ((before): ultrafine-gold-particle-dispersed PVA gel thin film prepared from NaAuCl₄ (4 mM), S465 (150 mM), and PVA (2 w/w%) immersed in water under gravity; (0 to 9.8): relation between PVA gel thin film, water, and air during the falling (number in figures indicates the elapsed time of falling from the start); and (after): relation between PVA gel thin film placed under gravity again, water, and air).

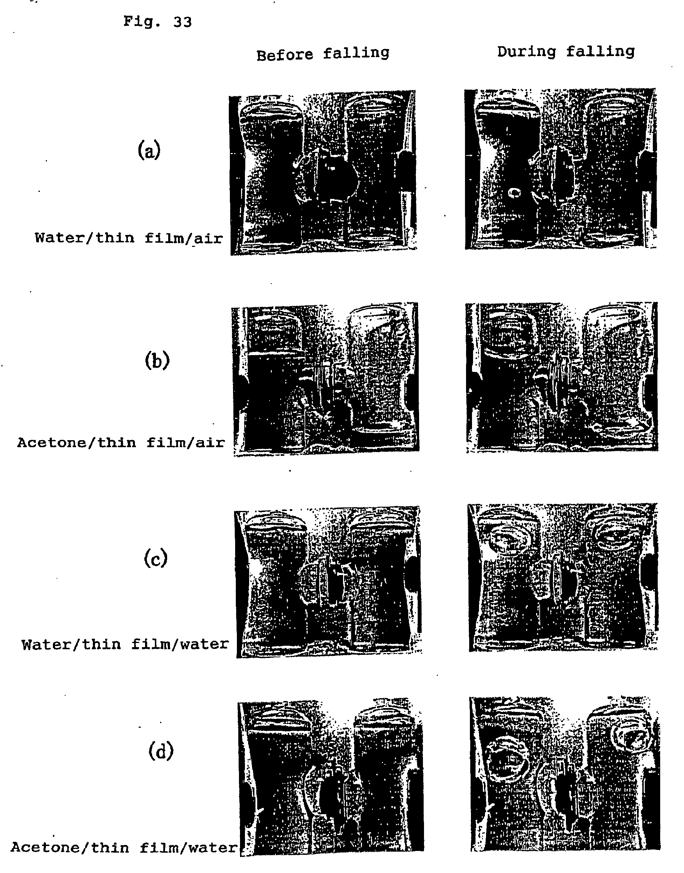

Fig. 33 includes photographs showing effects of solvent and microgravity on the ultrafine-gold-particle-dispersed PVA gel thin film described in Example 50 ((a): water/ultrafine-gold-particle-dispersed PVA gel thin film/air system; (b): acetone/ultrafine-gold-particle-dispersed PVA gel thin film/air system; (c): water/ultrafine-gold-particle-dispersed PVA gel thin film/water system; and (d): acetone/ultrafine-gold-particle-dispersed PVA gel thin film/water system).

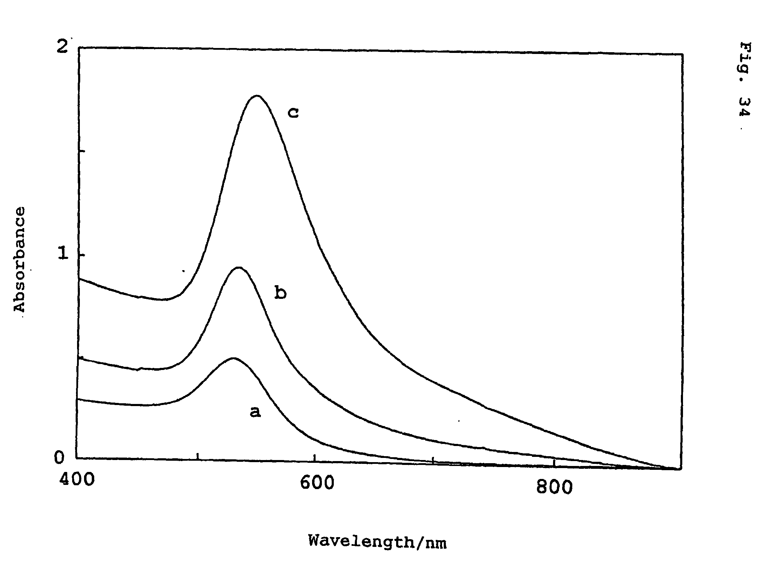

Fig. 34 includes UV-VIS absorption spectra of ultrafine-gold-particle-dispersed HPC thin film ((a): colloidal gold prepared from sodium chloroaurate aqueous solution, S465 aqueous solution, and HPC aqueous solution described in Example 22; (b): ultrafine-gold-particle-dispersed HPC thin film described in Example 51; (c): ultrafine-gold-particle-dispersed HPC thin film prepared through counter-diffusion of chloroauric acid and S465 from both surface sides of the HPC film described in Example 52.

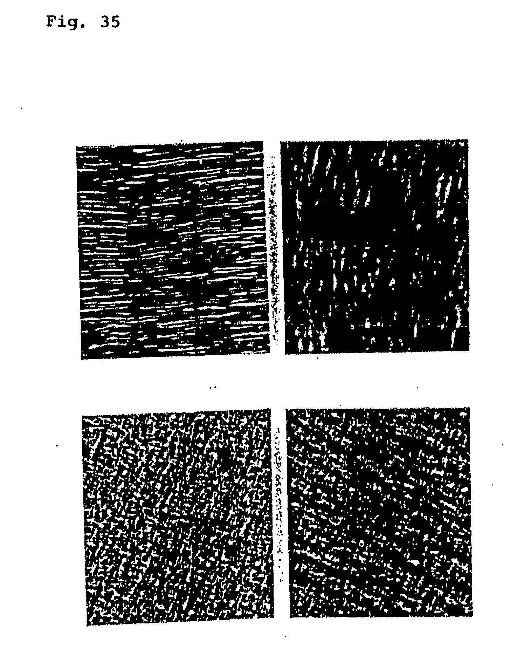

Fig. 35 includes polarization microscopic photographs of the HPC thin film described in Example 52.

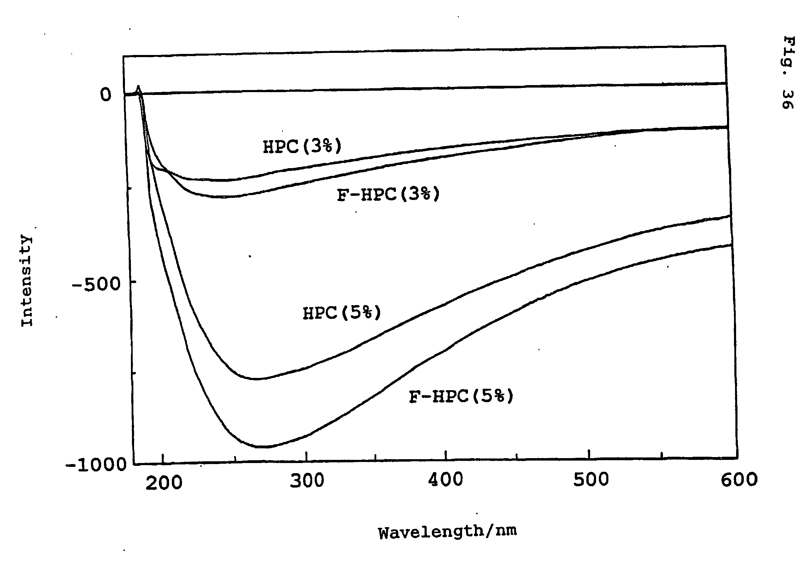

Fig. 36 includes CD spectra of the HPC thin film described in Example 52.

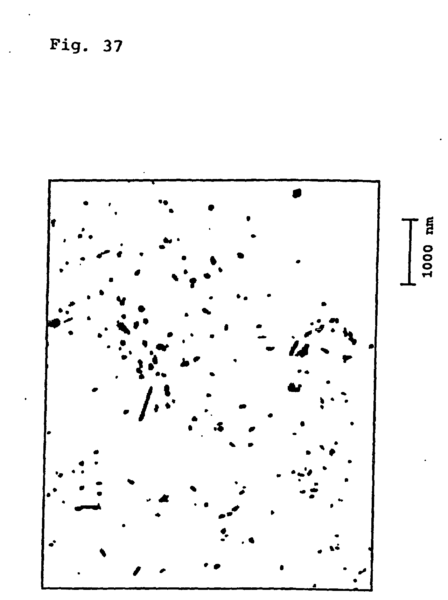

Fig. 37 includes a transmission electron microscopic image of a cross-section of ultrafine-gold-particle-dispersed HPC thin film prepared through counter-diffusion of chloroauric acid and S465 from both surface sides of the HPC thin film described in Example 53.

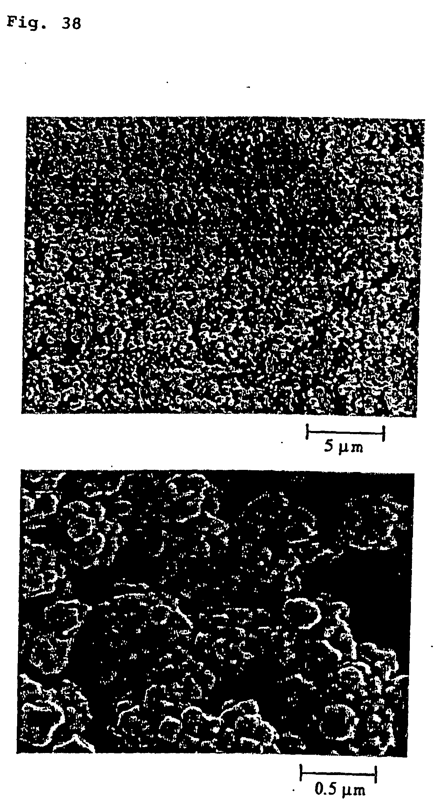

Fig. 38 includes scanning electron microscopic images of a surface of ultrafine-gold-particle-dispersed HPC thin film prepared through counter-diffusion of chloroauric acid and S465 from both surface sides of the HPC thin film described in Example 54.

### Best Modes for Carrying Out the Invention

The transition metal ions employed in the present invention encompass ions of any transition metal element species. Examples of the transition metals which can be employed include scandium-group elements (Sc, Y, La, and Ac); titanium-group elements (Ti, Zr, and Hf); vanadium-group elements (V, Nb, and Ta); chromium-group elements (Cr, Mo, and W); manganese-group elements (Mn, Tc, and Re); iron-group elements (Fe, Ru, and Os); cobalt-group elements (Co, Rh, and Ir); nickel-group elements (Ni, Pd, and Pt); and copper-group elements (Cu, Ag, and Au). Among these transition metal elements, noble metals such as platinum, palladium, rhodium, iridium, ruthenium, osmium, silver, and gold are preferred.

Examples of transition metal ions include noble metal complex ions and organometallic compound ions of noble metal. Specific examples include ions of platinum complexes, palladium complexes, rhodium complexes, iridium complexes, ruthenium complexes, osmium complexes, silver complexes, gold complexes, and non-stoichiometric compounds thereof; and ions of a variety of noble metal complexes; e.g., alkyl complexes, aryl complexes, metallacycle complexes, carbene complexes, olefin complexes, arene complexes, η-aryl complexes, cyclopentadienyl complexes, hydrido complexes, carbonyl complexes, oxo complexes, and nitrogen complexes.

More specific examples include gold complex ions such as dihalogenoaurate(I), dicyanoaurate(I), bis(thiosulfato)aurate(I), tetrahalogenoaurate(III), tetracyanoaurate (III), tetranitratoaurate (III), and tetrathiocyanatoaurate (III); and silver(I) ion. The raw material transition metal ions may be used singly or in combination of two or more species. These ions are abbreviated simply as "transition metal ions."

Among the nonionic surfactants having an ethylene moiety and/or an acetylene moiety employed in the present invention, acetylene-glycol nonionic surfactants having an acetylene moiety and two polyoxyethylene chains are remarkably useful, since the surfactants serve as an agent for reducing or oxidizing transition metal ions and a protective agent for preventing aggregation and precipitation of formed ultrafine metal particles. In this connection, α,α'-[2,4,7,9-tetramethyl-5-decyne-4,7-diyl]bis[ω-hydroxy-polyoxyethylene] is particularly preferred in the present invention.

Examples of the solvent include water, organic compounds, and water-organic compound mixtures. No particular limitation is imposed on the organic compounds, and any organic compounds can be used so long as the compounds are compatible with water. Examples include alcohols, polyhydric alcohols, and ketones such as acetone.

The polymers which can be employed in the present invention may be chemically synthesized polymers or naturally occurring polymers. Examples of the chemically synthesized polymers include vinyl polymers, aramid polymers, poly(vinyl alcohol), poly(N-vinylcarbazole), poly(vinylpyridine), polypyrrole, polyphenyl polymers, poly(phenylene sulfide), poly(vinylidene fluoride), poly(methyl methacrylate), polymethylene polymers, polyimidazole, polyimide, polystyrene, olefin polymers, elastomers, engineering polymers, polyolfein, polyester, polycarbonate, engineering plastics, epoxy polymers, phenolic polymers, polyurethane, polydinene polymers, acrylic polymers, polyacrylamide, polyamide, polyacetal, polyether, polyacetylene, polyaniline, polyisobutylene, polyisoprene, poly(ethylene terephthalate), polyene polymers, poly(vinylidene chloride), poly(vinyl chloride), polycarbonate, poly(vinyl acetate), polypropylene, ethylene polymers, ion-exchange resins (e.g., Nafion), and silicone derivatives. Examples of the naturally occurring polymers include agarose, gellan gum, cellulose polymers (e.g., hydroxyethyl cellulose, hydroxypropyl cellulose, and carboxymethyl cellulose), dextran, dextrin, alginate salts, hyaluronate salts, poly(glutamic acid), poly(lysine), chitosan, lignin, carageenan, silk fibroin, agar, and gelatin. These polymers may also be derivatives thereof, copolymers obtained from one or more species selected from among the polymers and/or polymer derivatives, polymer-polymer complexes, polymer alloys, polymer blends, and polymer composites.

Among these polymers, at least one species selected from among poly(vinyl alcohol), polyether, cellulose polymers, and modified products thereof are preferred. Examples of the modified products include formalized polymers, polymers irradiated with γ-ray, and glutalaldehyde-modified polymer. Among these polymers, poly(vinyl alcohol), poly(ethylene glycol), and hydroxypropyl cellulose are particularly preferred. The raw material polymers may be used singly or in combination of two or more species. Unless otherwise specified, the polymers are referred to simply as "polymers."

No particular limitation is imposed on the stoichiometry of transition metal ion during formation of a complex or on the medium for forming the complex, since the ultrafine metal particles are formed predominantly on the basis of complex formation between the transition metal ion and an ethylene or acetylene group. For example, in the presence of large amounts of ethylene or acetylene groups, the complex formation is not affected by the presence of two or more transition ions or the presence of one or more nonionic polymer. In this case, the ultrafine metal particles having a crystal structure that is similar to that obtained from one transition metal ion in a pure water medium are formed, thereby yielding an ultrafine-metal-particle-dispersed polymer solution.

The ultrafine-metal-particle-dispersed polymer solution can be produced by reacting a transition metal ion with an acetylene-glycol nonionic surfactant in a polymer solution (solvent: water, an organic compound, or a water-organic compound mixture). Also, the ultrafine-metal- particle-dispersed polymer solution can be produced by mixing a polymer solution with an ultrafine-metal-particulate solution produced by reacting a transition metal ion with an acetylene-glycol nonionic surfactant. The latter method is remarkably effective when alloy-forming ultrafine metal particles are to be produced.

Alternatively, the ultrafine-metal-particle-dispersed polymer solution can be produced by mixing a polymer solution with at least two types of ultrafine-metal-particle-dispersed solutions, each having been produced by reacting a transition metal ion with an acetylene-glycol nonionic surfactant. This method is remarkably valid when the mixture of ultrafine metal particles is produced from transition metal ions having different rates of forming ultrafine metal particles. Although the state of metal (positive or non interaction among different metal atoms, alloy, mixture, and solid solution) is different, there was no essential difference among the ultrafine-metal-particle-dispersed polymer solutions in three methods above-mentioned. Thus, these products are not necessarily considered different products.

When at least one species of transition metal ions is reacted with an acetylene-glycol nonionic surfactant in a solvent (water or an organic compound) in the presence of polymer thin film which is insoluble in the solvent, ultrafine metal particles are formed in the resultant solution and in the network structure of the polymer thin film, thereby yielding ultrafine-metal-particle-dispersed polymer thin film in which ultrafine metal particles are dispersed in the inside of the film and are deposited on a surface of the film. When the polymer thin film is produced from poly(vinyl alcohol), ultrafine metal particles formed in the vicinity of the thin film surface are adsorbed specifically on the surface of the poly(vinly alcohol) thin film, thereby forming a structure on the surface. Since the structure is determined by the surface state of the film, ultrafine metal particles can be orderly and two-dimensionally arranged.

In an ultrafine-metal- particle-dispersed solution (solvent: water or an organic compound) separately prepared from a transition metal ion species and an acetylene-glycol nonionic surfactant, polymer thin film which is insoluble in the solvent is placed, and the solution is allowed to stand, thereby transferring ultrafine metal particles into the network structure of the thin film. Thus, the ultrafine-metal-particle-dispersed polymer thin film, in which ultrafine metal particles are deposited on a surface of the polymer film and are dispersed in the polymer thin film, can be obtained.

In an aqueous solution, molecules of poly(vinyl alcohol) and polyethylene oxide (poly(ethylene glycol)), which are hydrophilic polymers, are surrounded by water molecules, due to their considerably high affinity for the water. A phase transition phenomenon is noted in the aqueous solution of acetylenic glycol nonionic surfactant. At higher temperature (higher than 50 °C), the aqueous phase is separated into two phases by dehydration around the surfactant, and the solution is cloud. The phase transition phenomenon (phase transition temperature) is reversible, and is not affected by coexistence of poly(vinyl alcohol) or polyethylene glycol, or rather, the phenomenon is strengthened. Thus, when aqueous solutions of tetrahalogenoaurate (III) ions, an acetylenic glycol nonionic surfactant, and poly(vinyl alcohol) were mixed at higher than 50 °C, the cloudy solution tinted pale red with time, and separated into two layers. Several days after, the temperature of the mixture fell around a room temperature. The two layers did not again change into the single layer and the two layers still remained. The following four types of ultrafine gold particles products exhibiting different dispersion states were formed by varying the concentrations of the three kind of solutions and the treatment conditions (temperature and time): (1) an ultrafine-gold-particle-dispersed poly(vinyl alcohol) solution formed of two (upper and lower) layers having different tints; (2) two layers formed of a colorless upper layer and a lower layer formed of a concentrated ultrafine-gold-particle-dispersed poly(vinyl alcohol) solution; (3) two layers formed of a colorless upper layer and a lower layer formed of ultrafine-gold-particle-dispersed poly(vinyl alcohol) gel; and (4) two layers formed of a colorless upper layer and a lower layer formed of ultrafine-gold-particle-dispersed poly(vinyl alcohol) gel or ultrafine-gold-particle-dispersed poly(vinyl alcohol) gel thin film. The ultrafine-gold-particle-dispersed poly(vinyl alcohol) gel is considered to be formed by the following mechanism. Firstly, ultrafine gold particles begin to form immediately after the three aqueous solutions are mixed. Simultaneously, poly(vinyl alcohol) and polyethylene oxide chains of the nonionic surfactant are cross-linked in parallel in the presence of the ultrafine gold particles serving as a catalyst under water effectively excluded hydrophobic conditions, thereby forming a network structure. In the network structure, thread-like or string-like fiber filaments, in which ultarfine gold particles are dispersed, are entangled to form a microporous structure. When the network structure was not formed, a concentrated ultrafine-gold-particle-dispersed poly(vinyl alcohol) solution was yielded.

Ultrafine-gold-particle-dispersed poly(vinyl alcohol) gel thin film was formed through the following steps: casting small amounts of three aqueous solutions of tetrahalogenoaurate(III) ions, an acetylene-glycol nonionic surfactant, and poly(vinyl alcohol), on a stainless-steel ring placed on a horizontally disposed vessel of wide surface area; e.g., a substrate made of glass, polyethylene, or a similar material having a flat, roughness-free surface; and allowing the resultant mixture to stand in a thermostatic air chamber for several days. The mechanism of the formation is considered to be similar to that of the ultrafine-gold-particle-dispersed poly(vinyl alcohol) gel. Specifically, poly(vinyl alcohol) and polyethylene oxide chains of the nonionic surfactant are cross-linked in the presence of the formed ultrafine gold particles serving as a catalyst, thereby forming a multilayer structure of ultrathin films, each having micropores and incorporating ultrafine gold particles dispersed therein. In this case, hydrophobic conditions are provided through evaporation of water. The temperature may be 50°C or lower, so long as water can be evaporated. The thickness (nm) and the size of micropores (nm) of the ultrathin film depend on the rate of vaporization of water. Specifically, an ultrathin film produced at 40°C is thicker than an ultrathin film produced at 60°C and has smaller micropores. The thickness of the gel thin film depends on feed amounts of three components; i.e., tetrahalogenoaurate(III) ions, the acetylene-glycol nonionic surfactant, and poly(vinyl alcohol).

As described above, a polymer having a vinyl alcohol group reacts with a polymer having an ethylene oxide group in the presence of ultrafine gold-containing particles acting as a catalyst, to thereby form a new polymer and a new polymer hydrogel. This reaction preferably proceeds under hydrophobic conditions (under gradual vaporization of the aforementioned turbid layer or water).

No particular limitation is imposed on the materials for producing ultrafine-metal-particle-dispersed polymer gel and ultrafine-metal-particle-dispersed polymer gel thin film, and any combinations of materials other than tetrahalogenoaurate(III) ions, an acetylene-glycol nonionic surfactant, and poly(vinyl alcohol) can be employed to form the gel and gel thin film. However, when one metal species is gold, and an acetylene-glycol nonionic surfactant and polyvinyl alcohol are used, ultrafine-metal-particle-dispersed polymer gel and ultrafine-metal-particle-dispersed polymer gel thin film can be produced without failure in a relatively simple manner.

Since the ultrafine-metal-particle-dispersed poly(vinyl alcohol) gel or ultrafine-metal-particle-dispersed poly(vinyl alcohol) gel thin film is formed in the manner that poly(vinyl alcohol) and polyethylene oxide chains of the nonionic surfactant are cross-linked in the presence of the ultrafine metal particles serving as a catalyst, thereby forming a network structure incorporating the ultrafine metal particles, the gel or the gel film can be produced by mixing ultrafine-metal-particulate aqueous solution prepared in the presence of an acetylene-glycol nonionic surfactant and poly(vinyl alcohol) aqueous solution, and heating or drying. Instead of employing an acetylene-glycol nonionic surfactant, the gel or gel thin film can be produced by mixing polyethylene glycol aqueous solution and poly(vinyl alcohol) aqueous solution in the presence of separately prepared ultrafine metal particles, and heating or drying. When ultrafine metal particles are dispersed, incorporated, or immobilized in the interior of polymer film and ultrafine metal particles are adsorbed, deposited, or spread on a surface of polymer film, the transparent polymer gel can be obtained in the manner to the case that ultrafine metal particles is powder or solution.

When immersed in water, ultrafine-(gold or gold-silver alloy)-particle-dispersed poly(vinyl alcohol) gel or ultrafine-(gold or gold-silver alloy)-particle-dispersed poly(vinyl alcohol) gel thin film was rapidly swelled by absorbing water. The thus-swollen gel or gel thin film was shrank reversibly to its initial state within a short period of time, upon heating, evaporating, or dehydration with an organic solvent which has high affinity for water and volatile (e.g., alcohol or acetone). Thus, the ultrafine-(gold or gold-silver alloy)-particle-dispersed poly(vinyl alcohol) gel or gel thin film proved to be a so-called intelligent polymer which responds to a stimulation; i.e., to water. The function is provided that polyethylene oxide (serving as a surfactant) and poly(vinyl alcohol)forming the gel have the high affinity for water, retain a considerably large amount of water and keep moisture in. The degree (magnitude) of swelling and shrinking can be modified on the basis of the polymerization degree or the composition of polyethylene oxide (surfactant) and polymer (poly(vinyl alcohol)) or a variety of combinations of polymers.

The ultrafine-(gold or gold-silver alloy)-particle-dispersed poly(vinyl alcohol) gel or gel thin film has nanometer-size micropores on the surface thereof and/or the interior of the gel or film. The size of the micropores decreases by swelling and increases by shrinking, the swelling and the shrinking are reversible. The swollen gel is in a sponge-like form. Since gas or liquid can easily passes through the micropores of the gel or gel thin film, the gel or the gel thin film is expected to apply as a porous material in a variety of fields.

The ultrafine-(gold or gold-silver alloy)-particle-dispersed poly(vinyl alcohol) gel or gel thin film exhibits electric conductivity on the surface and/or the cross-section thereof, since the gel or gel thin film contains a large amount of ultrafine gold or gold-silver alloy particles therein. Thus, the gel electrode or the gel thin film electrode that has micropores and undergoes a reversible swelling and shrinking process by the mediation of water can be produced. By switch on the electricity supply, the gel electrode or the gel thin film electrode can be used in a variety of electrode reactions, such as separation of ions, electrolysis, and catalytic reaction or in a regulation of flow of gas or liquid (gate, open-close operation, and conversion of electric displacement to dynamic displacement). Conversely, if the swelling and the shrinking of the gel or gel thin film by the mediation of water is mechanically suppressed, the dynamic displacement would be converted to the electric displacement. Owing to such a mechanism, the gel or gel thin film can be applied to a fuel cell employing water as a component thereof and working on the basis of a new mechanism, as well as to a lightweight, small cell (gel cell).

As has already been predicted and studied, ultrafine particles formed under non-gravity or microgravity (i.e., the circumstance in the convection-free and the diffusion domination) have a higher mono-dispersibility in size than particles under gravity, and regularly aligned, leading to growth of a larger crystal. Accordingly, ultrafine metal particles comprising one or more metal elements are also expected to be present in a more favorable state (purity, uniformity in size, homogeneity, mono-dispersity) under non-gravity or microgravity as compared with under gravity. In addition, the effects of gravity on a network structure (gel) formed through cross-linking of one or more dehydrated polymers under hydrophobic conditions in the presence of ultrafine metal particles or a multilayer structure of ultrathin film (gel thin film) are of interest, as are the effects of gravity on a water-mediated swelling and shrinking of ultrafine-metal-particle-dispersed polymer gel and ultrafine-metal-particle-dispersed polymer gel thin film. The aforementioned ultrafine-metal-particle-dispersed aqueous solution, ultrafine-metal-particle-dispersed polymer gel, ultrafine-metal-particle-dispersed polymer gel thin film, and ultrafine-metal-particle-dispersed polymer thin film, which are disclosed in the present invention, can be produced through a very simple method within limited space. In addition, the formation process can be visually observed, and the above products can be formed without additional operation after provision of the raw materials. Thus, the invention is envisaged to be remarkably effective for the study and production of such products in a space station to be carried out in the future.

Inorganic/organic hybrid materials such as a polymer hybrid material in which a nanometer-size inorganic substance is dispersed and an inorganic glass hybrid material in which polymer particles are dispersed have become of interest as new nano-composites. Although silica/polymer composites (most common) and metal oxide/polymer composites are generally prepared through the sol-gel method, a polymer material in which metal particles are dispersed is hardly known. Thus, ultrafine metal particle/polymer hybrid materials (ultrafine-metal-particle-dispersed polymer gel, ultrafine-metal-particle-dispersed polymer gel thin film, and ultrafine-metal-particle-dispersed polymer thin film) are expected to become of interest as new materials.

Ultrafine-gold-particle-dispersed poly(vinyl alcohol) gel and ultrafine-gold-silver-alloy-particle-dispersed poly(vinyl alcohol) gel each has a sponge-like structure in which thread-like or string-like stretchable fibrous filaments of various lengths are entangled, to thereby form nanometer-size micropores. Ultrafine-gold-particle-dispersed poly(vinyl alcohol) gel thin film and ultrafine-gold-silver-alloy-particle-dispersed poly(vinyl alcohol) gel thin film contain a large number of nanometer-size micropores, to thereby form a multilayer structure. These ultrafine-gold-particle-dispersed poly(vinyl alcohol) gel and thin film thereof and ultrafine-gold-silver-alloy-particle-dispersed poly(vinyl alcohol) gel and thin film thereof have electric conductivity and allow passage of gas (e.g., air) and liquid (e.g., water or alcohol) by virtue of micropores. In addition, these gel and thin film materials undergo swelling and shrinking by the mediation of water; i.e., swelling by rapidly absorbing a large amount of water and reversibly returning to the initial state within a short period of time by heating or dehydration with organic solvent or a similar material. The materials that have a characteristic structure and undergo swelling and shrinking by the mediation of water have not yet been reported. Thus, these materials can be regarded as novel functional polymer gel materials. The polymer gel and polymer gel thin film can be formed through simple and specific reaction in the presence of an ultrafine-gold-particulate catalyst under thermodynamically recognized circumstances. Such a remarkably simple preparation method is thought to be unique and of interest.

Presence of a large number of nanometer-size micropores in the ultrafine-gold-particle-dispersed poly(vinyl alcohol) gel and thin film and in the ultrafine-gold-silver-alloy-particle-dispersed poly(vinyl alcohol) gel and thin film suggests that, although the gel or the gel film is not an ordinary membrane, when it is filled up in a column, it exhibits functions similar to the case of the membrane such as a separation membrane, an exchange membrane, a reverse osmosis membrane, or a dialysis membrane.

In recent years, catalytic activity of ultrafine gold particles has become of interest. In particular, ultrafine gold particles exert an effect on selective oxidation of hydrocarbon by oxygen and selective hydrogenation of unsaturated hydrocarbon. Thus, polymer gel, polymer gel thin film, or polymer thin film containing ultrafine gold particles which are immobilized on a surface thereof or both on a surface and an interior thereof, is a remarkably valuable material, since the film can be placed into and removed from a reaction system in accordance with needs. Ultrafine gold particles or ultrafine alloy (gold and another noble metal) particles deposited on a surface of activated carbon or inorganic oxide (e.g., silica, titanium oxide, or iron oxide) selectively catalyze oxidation of carbon monoxide (CO) contained in air; reduction and decomposition of nitrogen oxides (NO, N₂O, etc.); and decomposition of halohydrocarbon, thereby removing CO from air and producing high-purity oxygen (O₂) and nitrogen (N₂). Ultrafine gold particles, exerting catalytic activity which is remarkably higher than that of a conventional catalyst, is of interest from the viewpoint of environmental protection and prevention of air pollution and global warming. Thus, polymer gel, polymer gel thin film, or polymer thin film containing ultrafine gold particles which are immobilized on a surface thereof or both on a surface and an interior thereof is remarkably effective material, since the film can be provided in a variety of manners (sticking, filling, coating, stacking, etc.).

At a low temperature such as 0°C, CO and O₂ are adsorbed onto gold atoms, to thereby selectively form carbon dioxide (CO₂). Therefore, polymer gel, polymer gel thin film, or polymer thin film containing ultrafine gold particles which are immobilized on a surface thereof or both on the surface and the inside thereof can be used for producing CO₂, regenerating a CO₂ gas laser, and providing CO gas mask materials and CO gas sensor parts, and thus are considered to be remarkably useful. A catalyst containing a platinum-group metal catalyzes complete hydrogenation of CO, thereby forming methane. However, in the presence of ultrafine gold particles, CO and CO₂ are partially hydrogenated, thereby forming methanol. Thus, catalytic reaction in the presence of ultrafine gold particles is redox reaction. The ultrafine-gold-particle-dispersed poly(vinyl alcohol) gel and thin film thereof and the ultrafine-gold-silver-alloy-particle-dispersed poly(vinyl alcohol) gel and thin film thereof have electric conductivity and allow passage of gas through micropores. When redox reaction is carried out on the surface of an electrode produced from the poly(vinyl alcohol) gel or gel thin film containing ultrafine gold particles or ultrafine gold-silver alloy particles acting as a catalyst, electric potential is considered to be generated on the surface of the electrode. This indicates applicability of the composite material to fuel cells employing NOₓ, CO, CO₂, methanol, etc. Such fuel cells are of interest from the viewpoint of simultaneous resolution of environmental pollution and supply of fuel cells in the future.

Since the polymer gel, polymer gel thin film, or polymer thin film can be readily placed into and removed from a sequential biological or chemical reaction system in accordance with needs, ultrafine metal particles can be employed, by setting a specified reaction as a target, as a catalyst. In addition to catalytic action, if the surfaces of the ultrafine metal particles are modified with a substrate of reaction, antibody, antigen, or enzyme, such modified particles can also be applied to a variety of biological and chemical reactions.

The poly(vinyl alcohol) gel thin film in which ultrafine gold particles, two types of ultrafine metal (gold and silver) particles, or ultrafine gold-silver alloy particles are dispersed is formed from poly(vinyl alcohol) and polyethylene oxide (polyethylene glycol), which have a strong affinity for water. Therefore, the gel thin film is human-friendly and suitable as a biological material. Since the gel thin film has nanometer-size pores and a multilayer structure (some tens of nm) in which ultrathin films of small thickness (some nm) are stacked, the film allows passage of gas (e.g., air) and liquid (e.g., water) and can contain a small amount of water even when the surfaces thereof are under dry conditions. When immersed in water, the gel thin film greatly swells by absorbing water. Then, when the swollen film is immersed in a solvent such as alcohol, water contained in the film is transferred into the solvent, thereby shrinking. The swelling and shrinking occur reversibly. On the basis of such characteristics, the gel film may be employed in the field of dermatology (skin substitute or artificial skin) or in the field of plastic surgery. Specifically, when the skin is damaged by injury or a burn, the damaged portion is covered with poly(vinyl alcohol) gel thin film having a thickness of some tens of micrometers until new skin is generated. Through this treatment, dermal respiration through the pores is assured, body fluid is absorbed, and a portion of the fluid remains the interior of the gel thin film (i.e., effecting moisturizing) and another portion of the fluid can be removed by alcohol for disinfection. Thus, complete drying of the covered portion is prevented. Exogenous bacteria are disinfected and sterilized by ultrafine silver particles, and connective tissue and plastic cells generated during generation of new skin cannot pass through nanometer-size micropores. By wetting a film-attached portion with physiological saline, infusion, or alcohol for disinfection, the poly(vinyl alcohol) gel thin film can be readily removed and replaced.

The poly(vinyl alcohol) gel in which ultrafine gold particles, two types of ultrafine metal (gold and silver) particles, or ultrafine gold-silver alloy particles are dispersed can be processed into a variety of forms (shape, dimensions, thickness, etc.) in accordance with needs. Elasticity, moisturizing action, and sterilizing power of the gel are considered to be effective for prevention and treatment of bedsore, which frequently occurs in people weakened by aging or disease or those who are bedridden.

When ultrafine metal particles are dispersed and immobilized on a surface of or an interior of a polymer gel, polymer gel thin film, or polymer thin film, electrically conductive ultrafine metal particles can be retained in a desired portion in a small amount, thereby providing small, lightweight parts and devices of a variety of shapes and properties. The above materials are useful in a variety of fields (e.g., the electric, electronic, computer, and optical fields) and the optoelectronic field. Examples of parts and devices to which the above materials are effectively applied include capacitors, pastes, switches, optical switches, photocells, photoconductive cells, paper cells, and solar cells.

The polymer gel, polymer gel thin film, and polymer thin film with which ultrafine metal particles are filled in an ordered manner can be employed as non-linear optical material for producing optical elements, optical switches, etc. In order to attain a fast response, colorless material has generally been required for non-linear optical materials. However, due to limitation of the rate of response, colored materials have become of interest in recent years, too. Since a glass material doped with ultrafine gold particles (i.e., ultrafine gold particles are dispersed in the interior of the material) has already been found to exhibit non-linear optical properties, ultrafine-metal-particle-dispersed polymer gel, polymer gel thin film, and polymer thin film are expected to exhibit non-linear optical properties. In consideration of future applications, polymer materials would be more useful than inorganic materials, since the polymer materials are easy to handle, have a wide range of applicability, and can be processed into a variety of forms. From this viewpoint, since the ultrafine-gold-particle-dispersed poly(vinyl alcohol) gel and thin film thereof and ultrafine-gold-silver-alloy-particle-dispersed poly(vinyl alcohol) gel and thin film thereof have a multilayer structure of nanometer-thickness ultrathin films, the single-layer (i.e., the lowest limit of multilayer) of ultrafine-gold-particle-dispersed poly(vinyl alcohol) gel ultrathin film and ultrafine-gold-silver-alloy-particle-dispersed poly(vinyl alcohol) gel ultrathin film can be formed. Thus, such film products are expected to find employment as non-linear optical materials.

The ultrafine-gold-particle-dispersed poly(vinyl alcohol) gel and ultrafine-gold-silver-alloy-particle-dispersed poly(vinyl alcohol) gel which have been repeatedly subjected to swelling-shrinking and washing-drying are formed from ultrafine (gold or gold-silver alloy) particles; poly(vinyl alcohol); poly(vinyl alcohol); and polyethylene oxide (polyethylene glycol) included in an acetylene-glycol nonionic surfactant. Thus, the non-toxic gel products, which undergo swelling and shrinking, are useful in drug delivery system (DDS) materials employed in the pharmaceutical field. In addition, the gel products can be remained in the body as well as on the surface of body.

The ultrafine-gold-particle-dispersed poly(vinyl alcohol) gel is wine-red in color, exerts moisturizing effect, and is formed from materials which are mild to the body. Thus, the gel is also suitable for cosmetics such as cheek rouges and lipsticks.

Disinfection and sterilization effects of silver and titanium oxide are enhanced by an increase in surface area induced by formation of ultrafine particles. Since silver and titanium oxide have action mechanisms that differ from each other, ultrafine complex metal (i.e., silver and titanium oxide) particles are envisaged to exert disinfection and sterilization effects within a wider range. When ultrafine silver particles and ultrafine titanium oxide particles are dispersed and immobilized in polymer gel or polymer thin film, disinfection and sterilization may be performed by use of smaller amounts of silver and titanium oxide. The ultrafine-(silver and/or titanium oxide)-particle-dispersed polymer gel and polymer thin film can be processed into a desired form, is pale yellow in color or is colorless, and can be produced at low cost. Thus, the polymer gel and polymer thin film can be stuck or applied to any objects such as ceilings, walls, floors, desks, shelves, and a variety of containers.

In general, greatly increasing demand is expected for sanitary materials such as paper diapers required in an aging society as well as in medical settings. In other words, the ultrafine-(silver or titanium oxide)-particle-dispersed polymer gel thin film, which exerts disinfection and sterilization effects, swells by absorbing water, retains absorbed water, and does not permit passage of water, is most suitable for materials for paper diapers and other sanitary products.

In addition, the disinfection and sterilization effects of the ultrafine-(silver and/or titanium oxide)-particle- dispersed polymer gel and polymer thin film are also effective for food storage. When foods such as fish or vegetables are stored by use of the polymer gel or polymer thin film, freshness thereof can be maintained for a long period of time.

In the medical field, ultrafine gold particles are employed as a marker for antigen-antibody reaction. The wine-red color of the ultrafine gold particles is generally favored, and the wine-red color ultrafine gold particles are commercially sold as a marker for an agent for diagnosing pregnancy. Thus, the ultrafine-gold-particle-dispersed polymer gel, polymer gel thin film, and polymer thin film are envisaged to be an effective probe in the field of clinical checking as well as in research fields such as biochemistry and immunochemistry.

In the field of spectroscopy, ultrafine gold particles and ultrafine silver particles are of interest as a probe for measuring surface-enhanced IR or surface-enhanced Raman scattering. Through the surface enhancement phenomenon relating to surface plasmon of gold or silver, IR absorption intensity and Raman scattering intensity are enhanced by a factor of approximately 10,000 or higher. Thus, identification of small amounts of functional groups present in a sample solution can be facilitated. The ultrafine-(gold or silver)-particle-dispersed polymer gel, polymer gel thin film, or polymer thin film is immersed in a sample solution or coated with a sample solution, to thereby perform IR and Raman scattering measurement. Thus, the ultrafine particles serve as a powerful probe for measuring surface-enhanced IR and surface-enhanced Raman scattering.

Recently, in the fields of immunochemistry and biochemistry, antigen-antibody reaction and intermolecular (e.g., DNA-DNA) interaction have been extensively studied through the surface plasmon resonance method, which is based on a surface plasmon phenomenon of gold. Ultrafine-gold-particle-dispersed polymer gel or thin film can be used to provide a gold surface. Since the surface plasmon phenomenon also occurs on a surface of ultrafine metal particles of other metals such as silver and copper, the ultrafine-metal-particle-dispersed polymer gel, polymer gel thin film, and polymer thin film may be a candidate for an effective probe in the future for the further development of the surface plasmon resonance method.

The ultrafine-metal-particle-dispersed polymer gel and gel thin film are characterized in that the materials can be formed into a desired shape with desired dimensions, while the properties of ultrafine metal particles are maintained and can be used anytime and anywhere. For example, the gel and gel thin film can be applied to colored contact lenses and sunglasses with effective lenses.

Silver has high affinity to oxygen molecules. Thus, the ultrafine-silver-particle-dispersed polymer gel, polymer gel thin film, and polymer thin film can be employed in a gas (e.g., oxygen) sensor.

The poly(vinyl alcohol) gel in which two kinds of ultrafine particles of gold and silver or ultrafine gold-silver alloy particles are dispersed is formed from components which are mild to the body; i.e., poly(vinyl alcohol) and polyethylene oxide (polyethylene glycol) included in an acetylene-glycol nonionic surfactant, gold and silver, which exerts disinfection and sterilization effects. And the gel absorbs water, remains water, swells, shrinks by alcohol, and can be formed into a desired shape. Thus, the gel is suitable for use in a skin-related area such as a membrane for percutaneous penetration of drug, and is suitable for employment as medical materials (e.g., sutures, artificial blood vessels, artificial corneas, artificial vitreous bodies, intraocular lenses, artificial arthroidal cartilage, artificial liver, bone-fixation material, and plugs for intracranial blood vessels) and as sanitary materials (e.g., non-woven fabric, pajamas, sheets, diapers, and sanitary goods).

The ultrafine-metal-particle-dispersed poly(vinyl alcohol) gel is readily spun. The thus-produced fiber has characteristics; i.e., high fatigue resistance, high mechanical strength, and high elastic modulus, similar to those of a fiber produced by spinning poly(vinyl alcohol) gel through other methods. Thus, the fiber is suitable for industrial materials (e.g., belts, hoses, tarpaulins, rope, slate sheets, and concrete mortar).

Gold has considerably high affinity for protein via an SH group of the protein. Thus, a protein can be retained and immobilized in the ultrafine-gold-particle-dispersed poly(vinyl alcohol) gel and gel thin film, forming the gel or the gel film with a protein. For example, when an enzyme is used as a protein, the gel or the gel film with an enzyme is formed, and the enzyme functions as an immobilized enzyme. Such the gel or the gel film having an enzyme, which can be used in a specific site, is suitable for diagnosis or treatment of patients who congenitally lack a specific enzyme. In addition, the enzyme in the gel or the gel film functions in a manner similar to that in a solution system of reaction generally requiring an enzyme and can be removed from the system anytime. Thus, the ultrafine-gold-particle-dispersed poly(vinyl alcohol) gel and gel thin film having the enzyme can be applied to a variety of fields where an enzyme is used.

The ultrafine-gold-particle-dispersed poly(vinyl alcohol) gel of the present invention is formed from gold, polyethylene oxide (polyethylene glycol), and poly(vinyl alcohol). These three components are mild to the living body and the environment and have already employed in medical sciences, pharmaceutical sciences, and medical care settings. Thus, materials produced from these components are characterized by being mild and friendly to the living body and the environment.

### Examples

The present invention will next be described by way of examples, which should not be construed as limiting the invention thereto.

Experiments under microgravity were performed in an underground test facility for falling tests (Japan Microgravity Center (JAMIC), Kamisunagawa-cho in Hokkaido) under the following conditions.
Height of fall: 490 m;
Time of fall: 10 sec;
Level of microgravity: 10⁻⁴ g (acceleration of gravity);
Acceleration during braking: 10 g (acceleration of gravity); Capsule weight: 5,000 kg;
Capsule diameter: φ1,800 mm;
Method of compensating air drag: double-capsule and thruster; Guide method: guide rail;
Breaking method: air damping brake

### [Example 1]

An aqueous solution of sodium chloroaurate (4 mM, 2 ml) was mixed in a test tube with an aqueous solution of polyvinyl alcohol (PVA) (1 w/w%, 4 ml) and an aqueous solution of α,α'-[2,4,7,9-tetramethyl-5-undecene-4,7-diyl]bis[ω-hydroxy-polyoxyethylene] (an acetylene-glycol nonionic surfactant, Surfynol 465 (Product of AirProduct & Chemicals), hereinafter referred to as S465) (0.4 M, 2 ml). The mixture was left to stand in a 30°C thermostatic bath. Six days after, the mixture assumed a wine red color. Fig. 1b shows a UV-VIS absorption spectrum of the mixture, and Fig. 2a shows the transmission electron microscopic image of the mixture. Figs. 1b and 2a show that, like the case where an ultrafine-gold-particle-dispersed aqueous solution (colloidal gold; Fig. 1a) was produced from aqueous solutions of sodium chloroaurate and S465, an ultrafine-gold-particle-dispersed PVA aqueous solution was formed. These results indicate that the choice of whether to employ PVA does not affect formation of ultrafine gold particles. Since the primary factor in producing ultrafine gold particles is the formation of a the complex between an aureate ion and an acetylene group, when other tetrahalogenoaurate(III) salt species than sodium chloroaurate were employed as the source of the aureate ion, ultrafine gold particles were also formed successfully.

### [Example 2]

By use of aqueous solutions of chloroauric acid (5 mM, 30 ml) and S465 (1 M, 30 ml), an ultrafine-gold-particle-dispersed aqueous solution was prepared (colloidal gold, Fig. 3a). The resultant solution (5 ml) was mixed with an aqueous solution of PVA (concentration; 0, 1, 1.5, 2, 2.5, 3, or 4 w/w%, 5 ml each), and the mixture was left to stand in a 60°C thermostatic bath for 20 hours. Except for the case of 0 w/w% (water, Fig. 3b), each of the resultant solutions was separated into a gel-like mass (upper layer) assuming a dark reddish brown color, a colorless or pale pink solution (middle layer), and a concentrated solution (bottom layer) assuming a dark wine red color, indicating formation of an ultrafine-gold-particle-dispersed PVA gel and a concentrated ultrafine-gold-particle-dispersed PVA aqueous solution (Figs. 3c, 3d, 3e, 3f, 3g, and 3h). Moreover, the proportion of the layers was found to depend on the volume or the concentration of the aqueous solution of PVA and the reaction time. The procedure also showed that an ultrafine-gold-particle-dispersed PVA gel and a concentrated ultrafine-gold-particle-dispersed PVA aqueous solution can be produced either by simultaneous employment of aqueous solutions of chloroaurate salt, S465, and PVA as raw materials, or by employment of, as raw materials, an aqueous solution of PVA and colloidal gold produced from aqueous solutions of chloroaurate salt and S465.

### [Example 3]

An aqueous solution of chloroauric acid (10 mM, 1 ml) was mixed with an aqueous solution of S465 (1 M, 1 ml) and water (1 ml) in a test tube, and the mixture was left to stand in a 60°C thermostatic bath. After elapse of 80 minutes, the mixture assumed a dark wine red color. An aqueous solution of PVA (2 w/w%, 2 ml) was added thereto, and the mixture was left to stand in a 60°C thermostatic bath for 30 hours, to thereby yield a pale pink aqueous solution as an upper layer and a mass of dark reddish brown gel at the bottom of the test tube. The upper layer was removed, to thereby obtain a single mass of ultrafine-gold-particle-dispersed PVA gel (Fig. 4-Aa). Separately, an aqueous solution of chloroauric acid (10 mM, 1 ml) was mixed with an aqueous solution of S465 (1 M, 1 ml) and an aqueous solution PVA (2 w/w%, 2 ml) in a test tube, and the mixture was left to stand in a 60°C thermostatic bath. After elapse of 32 hours, numerous small fragments of dark reddish brown gel precipitated at the bottom of the test tube, leaving a pale pink aqueous solution above the precipitate. The clear solution was removed, to thereby obtain numerous small fragments of ultrafine-gold-particle-dispersed PVA gel (Fig. 4-Da). The results show that, through a reaction of chloroauric acid with S465 and PVA in aqueous medium at 60°C, an ultrafine-gold-particle-dispersed PVA gel being a dark reddish brown color is produced, and the morphology of the gel depends on when PVA is added.

### [Example 4]

When a single mass of ultrafine-gold-particle-dispersed PVA gel prepared in Example 3 was immersed in acetone, the gel shrunk (Fig. 4-Ba). Subsequently, the resultant gel was subjected to heat treatment at 100°C for 2 hours, with the results that the resultant gel further shrank (Fig. 4-Ca). The shrunken gel was then immersed in water. The gel was swelled and recovered its original size. Separately, when acetone was added to the numerous small fragments of ultrafine-gold-particle-dispersed PVA gel obtained in Example 3, the fragments of the gel tended to aggregate (Fig. 4-Ea). Addition of water to the aggregated fragments of gel achieved re-dispersion of the fragments. Although the forms of the gel i.e., the mass and the fragments, are different, the ultrafine-gold-particle-dispersed PVA gel was found to absorb a large amount of water, to thereby swell to a large size. Moreover, it was found that through the absorption and the release of water, the gel reversibly swelled and shrank, and the gel fragments reversibly dispersed and aggregated.

### [Example 5]

The water content of the ultrafine-gold-particle-dispersed PVA gel prepared in Example 3 was determined on the basis of weight of the gel, in the following manner. After the gel was immersed in acetone, the gel was treated heating at 100°C for two hours to have the dry gel. The weight of the dry gel was measured. Subsequently, the gel was immersed in water to thereby swell the gel, and the weight of the swollen gel was measured. The water content of the ultrafine-gold-particle-dispersed PVA gel swelled was estimated from the difference of two weights at 55.3. The gel was found to absorb a large amount of water; i.e., 55 times the weight of the gel (Table 1).

**Table 1**

| Water content of ultrafine-gold-particle-dispersed PVA gel and ultrafine-gold-silver-alloy-particle-dispersed PVA gel of Examples 5 and 19, respectively | | | | | | | |
|---|---|---|---|---|---|---|---|
| | HAuC₁₄ | AgNO₃ | S465 | weight of gel (1) | weight of swollen gel (2) | weight of water absorbed by gel (3) | water content (4) |
| | mM | mM | M | g | g | G | |
| a | 10 | 0 | 1 | 0.0112 | 0.6305 | 0.6193 | 55.3 |
| b | 10 | 1 | 1 | 0.0116 | 0.6419 | 0.6303 | 54.3 |
| c | 10 | 2 | 1 | 0.0110 | 0.6453 | 0.6343 | 57.7 |
| d | 10 | 5 | 1 | 0.0107 | 0.6228 | 0.6121 | 57.2 |
| e | 10 | 10 | 1.5 | 0.0125 | 0.7244 | 0.7119 | 57.0 |
| f | 10 | 10 | 2 | 0.0121 | 0.7294 | 0.7173 | 59.3 |
| (1) As measured after being immersed in acetone and heating | | | | | | | |
| (2) As measured after being immersed in water | | | | | | | |
| (3) (Weight of swollen gel) - (weight of gel) | | | | | | | |
| (4) (Weight of water absorbed by gel)/(weight of gel) | | | | | | | |

### [Example 6]

An aqueous solution of sodium chloroaurate (10 mM, 5 ml) was mixed with an aqueous solution of S465 (1 M, 5 ml) and an aqueous solution of PVA (2 w/w%, 10 ml) in a test tube, and the mixture was left to stand in a 30°C thermostatic bath. Six days after, the color of the mixture was dark wine red. The mixture was left to stand in a 60°C thermostatic bath for 30 hours, to thereby yield a pale pink aqueous solution as an upper layer and a mass of dark reddish brown gel at the bottom of the test tube. The X-ray diffraction spectrum of the gel (Fig. 5) reveals the presence of single crystalline gold in the gel. These results indicate that an ultrafine-gold-particle-dispersed PVA aqueous solution can also be produced from aqueous solution of sodium chloroaurate, S465 solution and PVA in the similar manner to the case of Example 1, although the concentrations of sodium chloroaurate, S465 solution and PVA were different, and by the treatment of the ultrafine-gold-particle-dispersed. PVA aqueous solution at 60°C, that was the same temperature as employed in Examples 2 and 3, an ultrafine-gold-particle-dispersed PVA gel can be obtained.

### [Example 7]

The procedure of Example 6 was repeated using a test tube to which a small glass stick was attached at its center was employed, whereby an ultrafine-gold-particle-dispersed PVA gel shaped like a doughnut was obtained. The gel was suspended in another test tube, and water was added thereto such that the gel sank in the water (Fig. 6a). The gel gradually swelled, and, one week after, a gel having a considerably large size was obtained (Fig. 6b). When a test tube whose bottom or the vicinity thereof has a shape different from that of the above test tube was employed to produce such a gel, a gel having a shape corresponding to the shape of the employed tube was obtained. For example, when a test tube having a triangular bottom was employed, a gel having a shape corresponding to the triangular bottom was formed.

### [Example 8]

A portion of an ultrafine-gold-particle-dispersed PVA gel was cut, and the cut piece was wet with water. The wet gel piece was pushed onto a glass slide (Fig. 7a) and covered with a glass cover, followed by observation by means of an optical microscope. A fibrous structure (Fig. 7b) was observed at the periphery of the gel. At a thin portion of the gel, a structure (Fig. 7c) in which a plurality of gel sheets having pores of several tens of µm in diameter are laminated was observed. These results indicate that an ultrafine-gold-particle-dispersed PVA gel form a network structure with pores having a diameter of micrometer size.

### [Example 9]

A portion of an ultrafine-gold-particle-dispersed PVA gel was cut and suspended by use of a stainless steel wire. The effect of solvent on the state of gel piece was observed (Fig. 8). Gold-colored (as viewed white in Fig. 8) small spots observed in the gel surface are gold particles. When the gel piece was immersed in water, the gel piece absorbed water and swelled, whereas when the gel piece was immersed in acetone, water was discharged from the gel and the gel piece diminished in size. In the upper photographs, the gel piece immersed in water was observed to have a flat surface, and the gel piece immersed in acetone was observed to have a structured surface. In the lower photographs, the interior of the gel piece immersed in water or acetone was observed to have a sponge-like structure. It was found that the gel immersed in water absorbs water and swells, whereas the gel immersed in acetone discharges water and diminishes in size, supporting the network structure of the gel with pores of micrometer size, described in Example 8.

### [Example 10]

An aqueous solution of silver nitrate (10 mM, 2 ml) was mixed in a test tube with an aqueous solution of PVA (1 w/w%, 4 ml) and an aqueous solution of S465 (0.8 M, 2 ml), and the mixture was left to stand in a 30°C thermostatic bath. Six days after, the mixture assumed a dark khaki brown color. Fig. 1e shows a UV-VIS absorption spectrum of the mixture, and Fig. 2b shows the transmission electron microscopic image of the mixture. Figs. 1e and 2b reveal that, in the similar manner to the case where an ultrafine-silver-particle-dispersed aqueous solution (colloidal silver; Fig. 1d) was produced from aqueous solutions of silver nitrate and S465, an ultrafine-silver-particle-dispersed PVA aqueous solution was formed. These results indicate that the formation of ultrafine silver particles is not affected by adding PVA. Since the primary factor in producing ultrafine silver particles is the formation of a complex between a silver ion and an acetylene group, when, in place of silver nitrate, silver perchlorate was employed as the silver ion, the ultrafine silver particles were also formed successfully.

### [Example 11]

The ultrafine-silver-particle-dispersed PVA aqueous solution prepared in Example 10 was left to stand in a 60°C thermostatic bath. After elapse of 20 hours, the solution was separated into a dark reddish brown layer and a light reddish brown layer. The upper layer was removed, whereby a concentrated ultrafine-silver-particle-dispersed PVA aqueous solution was obtained.

### [Example 12]

From silver nitrate aqueous solution (7 mM, 10 ml) and S465 aqueous solution (0.35 M, 10 ml), an ultrafine-silver-particle-dispersed aqueous solution was prepared (colloidal silver). The resultant solution (5 ml) was mixed with an aqueous solution of PVA (concentration; 0, 1, 1.5, 2, 2.5, 3, or 4 w/w%, 5 ml each), and the mixture was left to stand in a 60°C thermostatic bath for 20 hours. Except for the case of 0 w/w% (water), each of the resultant mixture was separated into a dark khaki brown layer and a light khaki brown layer. From the lower layer(a dark khaki brown layer), a concentrated ultrafine-silver-particle-dispersed PVA aqueous solution and a gel were obtained. Moreover, the quantity of the concentrated ultrafine-silver-particle-dispersed PVA aqueous solution formed depended on the volume or the concentration of PVA aqueous solution. It was found that the ultrafine-silver-particle-dispersed PVA gel or the concentrated ultrafine-silver-particle-dispersed PVA aqueous solution can be produced either by simultaneous employment of aqueous solutions of silver ion, S465, and PVA as raw materials, or by employment of, as raw materials, an PVA aqueous solution and the colloidal silver produced from aqueous solutions of silver ion and S465.

### [Example 13]

An aqueous solution of sodium chloroaurate (2 mM, 2 ml) was mixed in a test tube with silver nitrate aqueous solution (2 mM, 2 ml), S465 aqueous solution (75 mM, 2 ml), and PVA aqueous solution (2 w/w%, 4 ml), and the mixture was left to stand in a 30°C thermostatic bath. Six days after, the mixture assumed a reddish purple color. Fig. 1h shows a UV-VIS absorption spectrum of the mixture, Fig. 2c shows the transmission electron microscopic image of the mixture, and Fig. 9 shows an energy dispersive X-ray spectrum of the transmission electron microscopic image of the mixture. Figs. 1h, 2c and 9 reveal that, in the similar manner to the case where an ultrafine-gold-silver-alloy-particle-dispersed aqueous solution (colloidal gold-silver-alloy; Fig. 1g) was produced from aqueous solutions of sodium chloroaurate, silver nitrate, and S465, an ultrafine-gold-silver-alloy-particle-dispersed PVA aqueous solution was formed in the presence of PVA. When other tetrahalogenoaurate(III) salt than sodium chloroaurate were employed as the gold ion source, or when other silver perchlorate than silver nitrate were employed as the silver ion source, ultrafine gold-silver alloy particles were also formed successfully.

### [Example 14]

The ultrafine-gold-silver-alloy-particle-dispersed PVA aqueous solution prepared in Example 13 was left to stand in a 60°C thermostatic bath. After elapse of 20 hours, in the similar manner to the case of the ultrafine-gold-particle-dispersed PVA aqueous solution, the solution was separated into a gel-like mass (upper layer) assuming a dark reddish purple color, a colorless liquid (middle layer), and a concentrated solution (lower layer) assuming a dark reddish purple color, indicating formation of an ultrafine-gold-silver-alloy-particle-dispersed PVA gel and a concentrated ultrafine-gold-silver-alloy-particle-dispersed PVA aqueous solution.

### [Example 15]

From aqueous solutions of sodium chloroaurate (5 mM, 10 ml), silver nitrate (5 mM, 10 ml), and S465 (2 M, 10 ml), an ultrafine-gold-silver-alloy-particle-dispersed aqueous solution was prepared (colloidal gold-silver alloy). The resultant solution (5 ml) was mixed with an aqueous solution of PVA (concentration; 0, 1, 1.5, 2, 2.5, 3, or 4 w/w%, 5 ml each), and the mixture was left to stand in a 60°C thermostatic bath for 20 hours. Except for the case of 0 w/w% (water), each of the resultant mixtures was separated into a gel-like mass (upper layer) assuming a dark reddish purple color, a colorless liquid (middle layer), and a concentrated solution (bottom layer) assuming a dark reddish purple color, indicating formation of an ultrafine-gold-silver-alloy-particle-dispersed PVA gel and a concentrated ultrafine-gold-silver-alloy-particle-dispersed PVA aqueous thick solution. Moreover, the proportion of the layers was found to depend on the volume or the concentration of PVA aqueous solution and the reaction time.

### [Example 16]

An ultrafine-gold-silver-alloy-particle-dispersed PVA aqueous solution was prepared at 30°C from aqueous solutions of sodium chloroaurate solution (2 mM, 5 ml), silver nitrate (2 mM, 5 ml), S465 (125 mM, 5 ml), and PVA (2 w/w%, 10 ml). The obtained solution was treated at 60°C to thereby prepare an ultrafine-gold-silver-alloy-particle-dispersed PVA gel. The fluorescence X-ray spectrum of the gel was measured (Fig. 10). From the spectrum, the mole ratio of gold to silver was found to be 56:44. The mole ratio exactly coincides with the mole ratio of gold to silver contained in the raw materials; i.e., 1:1.

### [Example 17]

An aqueous solution of chloroauric acid (1 ml), an aqueous solution of silver nitrate (1 ml), and an aqueous solution of S465 (1 ml) each having a concentration shown in Table 1 were mixed together in a test tube, and the mixture was left to stand in a 60°C thermostatic bath for 80 minutes. An aqueous solution of PVA (2 w/w%, 2 ml) was added thereto, and the mixture was left to stand in a 60°C thermostatic bath for 30 hours, to thereby yield a pale pink aqueous solution as an upper layer and a mass of dark reddish purple gel at the bottom of the test tube. The upper layer was removed, to thereby obtain a single mass of ultrafine-gold-silver-alloy-particle-dispersed PVA gel (Figs. 4-Ab, c, d). Separately, an aqueous solution of chloroauric acid (1 ml) was mixed with an aqueous solution of silver nitrate (1 ml), an aqueous solution of S465 (1 ml), and an aqueous solution of PVA (2 w/w%, 2 ml) in a test tube, and the mixture was left to stand in a 60°C thermostatic bath. After elapse of 32 hours, numerous small fragments of dark reddish purple gel precipitated at the bottom of the test tube, leaving a pale pink aqueous solution above the precipitate. The clear solution was removed, to thereby obtain numerous small fragments of ultrafine-gold-silver-alloy-particle-dispersed PVA gel (Figs. 4-Db, c, d). The results show that, in the similar manner to the case of the ultrafine-gold-particle-dispersed PVA gel obtained in Example 3, through a reaction of chloroauric acid with silver nitrate, S465, and PVA at 60°C, an ultrafine-gold-silver-alloy-particle-dispersed PVA gel assuming a dark reddish purple color is produced, and the morphology of the gel depends on when PVA is added.

### [Example 18]

When a single mass of ultrafine-gold-silver-alloy-particle-dispersed PVA gel prepared in Example 17 was added to acetone, the gel diminished in size (Figs. 4-Bb, c, d). Subsequently, the resultant gel was subjected to heat treatment at 100°C for 2 hours, with the results that the resultant gel further diminished in size (Figs. 4-Cb, c, d). The shrunken gel was then immersed in water. The gel became swelled and recovered its original size. Separately, when acetone was added to the numerous small fragments of ultrafine-gold-silver-alloy-particle-dispersed PVA gel obtained in Example 17, the fragments of the gel tended to aggregate (Figs. 4-Eb, c, d). Addition of water to the aggregated fragments of gel achieved re-dispersion of the fragments. Similarly to the case of ultrafine-gold-particle-dispersed PVA gel, although the forms of the gel i.e., the mass and the fragments, are different, the ultrafine-gold-silver-alloy-particle-dispersed PVA gel was also found to absorb a large amount of water, to thereby swell to a large size. Moreover, it was found that through the absorption and the release of water, the gel reversibly swelled and shrank, and the gel fragments reversibly dispersed and aggregated.

### [Example 19]

The water content of the ultrafine-gold-silver-alloy-particle-dispersed PVA gel prepared in Example 17 was determined on the basis of weight of the gel, in the following manner. After the gel was immersed in acetone, the gel was treated heating at 100°C for 2 hours to have the dry gel. The weight of the dry gel was measured. Subsequently, the gel was immersed in water to thereby swell the gel, and the weight of the swollen gel was measured. The water content of the ultrafine-gold-silver-alloy-particle-dispersed PVA gel swelled was estimated from the difference of two weights and was shown in Table 1. The weight of the gel increased with the increase of the concentration of S465. But even if the concentration of silver ion increased, the weight of the gel hardly changed. Similarly to the ultrafine-gold-particle-dispersed PVA gel described in Example 5, the thus-obtained ultrafine-gold-silver-alloy-particle-dispersed PVA gel was also found to absorb a large amount of water; i.e., 55 to 60 times the weight of the gel.

### [Example 20]

A colloidal solution of gold (1 ml) prepared from sodium chloroaurate aqueous solution (2 mM, 2 ml) and S465 aqueous solution (50 mM, 2 ml) was added to an aqueous solution of PVA (1 w/w%, 100 ml) immediately before the PVA solution began boiling. One minute thereafter, an ultrafine-gold-particle-dispersed PVA gel was formed. Likewise, when a colloidal solution of silver or a colloidal solution of gold-silver alloy was employed instead of a colloidal solution of gold, an ultrafine-silver-particle-dispersed PVA gel or an ultrafine-gold-silver-alloy-particle-dispersed PVA gel was formed correspondingly.

### [Example 21]

The same ultrafine-gold-particle-dispersed PVA gel as that obtained from Example 20 under gravity was also produced under microgravity.

### [Example 22]

Under almost the same experimental conditions (temperature, reaction time, etc.) to those employed in Examples 1 to 21, in which PVA was used as a polymer, hydropropylcellulose (HPC) aqueous solution was employed instead of PVA aqueous solution, to thereby successfully form a colloidal solution of gold, silver, or gold-silver alloy (Figs. 1c, 1f, and 34), a concentrated gold, silver, or gold-silver-alloy-ultrafine-particle-dispersed solution, or a gold silver, or gold-silver-alloy-ultrafine-particle-dispersed HPC gel.

### [Example 23]

An aqueous solution of PVA (1 w/w%, 7 ml) was cast on a petri dish (diameter: 6 cm) and left to stand in a 40°C thermostatic air chamber for one week, to thereby cast a PVA film. The film was formalized, whereby a water-insoluble PVA thin film was produced. Using a glass twin-cell devise a diaphragm holder between cells specially made, the PVA film was held as the diaphragm between the two cells, chloroauric acid aqueous solution (0.2 mM) and S465 aqueous solution (6 mM) were separately filled in the cells. The two ions of chloroauric acid and the molecule of S465 counter-diffused from both surface sides of the PVA thin film. After elapse of 12 hours, the PVA thin film was lightly tinted wine red. The wine red color of PVA thin film was getting dark with increasing time, and the UV-VIS absorption spectrum of the PVA thin film (Method I of Figs. 11 and 12) presented a peak aroud 530 nm. Both the aqueous solutions of chloroauric acid and S465 in the cells were replaced by fresh solutions every 24 hours. The peak around 530 nm of the PVA thin film yielded increased in height. Thus, it was suggested the formation of ultrafine gold particles in the PVA thin film. The PVA thin film assuming a wine red color was removed from the cells, thoroughly washed with water, and allowed to stand for drying. The wine red color of the PVA thin film remained unchanged. This indicates that ultrafine gold particles remain in the PVA thin film, proving that ultrafine gold particles were successfully immobilized (cast) in the PVA thin film.

### [Example 24]

In the manner similar manner to that described in Example 23, the counter-diffusion of an aqueous solution of chloroauric acid (0.2 mM) and an aqueous solution of S465 (6 mM) was performed for 96 hours, to thereby yield a PVA thin film assuming a wine red color. The TEM images of the cross section of the thin film (Figs. 13C and 14) show the presence of ultrafine metal particles. These results, taken together with the results of the UV-VIS absorption spectrum obtained in Example 23, indicate the formation of ultrafine gold particles in interior of the PVA thin film, demonstrating that an ultrafine-gold-particle-dispersed PVA thin film was successfully produced.

### [Example 25]

The SEM images (Fig. 14) of the surface of the ultrafine-gold-particle-dispersed PVA thin film prepared in Example 24 show the presence of ultrafine metal particles in an aggregated form on both the surfaces; i.e., the surface from which the aqueous chloroauric acid solution was diffused (hereinafter referred to as "the chloroauric acid side surface") and the surface from which the aqueous S465 solution was diffused (hereinafter referred to as "the S465 side surface").

### [Example 26]

On the basis of the SEM image of the S465 side surface of the ultrafine-gold-particle-dispersed PVA thin film shown in Example 25, there were obtained an energy dispersive X-ray spectrum (Fig. 15) and element maps (Au-m, Au-1, Cl-k, O-k, C-k) (Figs. 16a and 16b), which support the presence of gold; i.e., that the ultrafine metal particles on the surface are the ultrafine gold particles.

### [Example 27]

The laser Raman spectrum of the surfaces of the ultrafine-gold-particle-dispersed PVA thin film prepared in Example 24 (Fig. 17) shows that surface-enhanced Raman phenomena are observed on both the chloroauric acid side surface (C) and the S465 side surface (B).

### [Example 28]

Fig. 13 shows TEM images of cross sections of PVA thin films which were produced by means of counter-diffusion described in Example 23 with modifications regarding the manner of replacing the aqueous solution of chloroauric acid and the aqueous solution of S465 in the cells by fresh solutions. The time during which counter-diffusion was allowed to proceed for each case of (A), (B), or (C) was 96 hours. In the case of (A), every 12 hours, the old aqueous solution of chloroauric acid was replaced by a fresh aqueous solution of S465 and the old aqueous solution of S465 was replaced by a fresh aqueous solution of chloroauric acid. In the case of (B), every 24 hours, the old aqueous solution of chloroauric acid was replaced by a fresh aqueous solution of S465 and the old aqueous solution of S465 was replaced by a fresh aqueous solution of chloroauric acid. In the case of (C), every 24 hours, the old aqueous solutions of chloroauric acid and S465 were replaced by the fresh aqueous solutions of chloroauric acid and S465, respectively. Each of TEM images demonstrates the presence of ultrafine metal particles, more specifically formation of ultrafine gold particles in the PVA thin film, proving that an ultrafine-gold-particle-dispersed PVA thin film was successfully produced. The procedure reveals that through the modification of the manner of replacing the aqueous solution of chloroauric acid and the aqueous solution of S465 in the cells, the various states of the dispersion of ultrafine gold particles in the PVA thin film can be obtained and there can be produced an ultrafine-gold-particle-dispersed PVA thin film in the interior of which ultrafine gold particles are dispersed in accordance with needs.

### [Example 29]

Although, in the counter-diffusion method described in relation to Example 23, both the aqueous solutions of chloroauric acid (0.2 mM) and S465 (6 mM) on both surface sides of the PVA thin film were replaced by fresh solutions every 24 hours, a constant supply of the fresh aqueous solutions of chloroauric acid and S465 by use of pumps also yielded a PVA thin film assuming a wine red color. The UV-VIS absorption spectra of the PVA thin film (Method II of Fig. 12, and Fig. 18) showed that ultrafine gold particles were formed in the PVA thin film, in the similar manner to the case of Example 23. When the PVA thin film assuming a wine red color was removed from the cells, thoroughly washed with water, and allowed to stand for drying, the wine red color of the PVA thin film remained unchanged. This indicates that ultrafine gold particles remain in the PVA thin film, proving that ultrafine gold particles were successfully immobilized (carried) within the PVA thin film.

### [Example 30]

The TEM images of the cross section of the ultrafine-gold-particle-dispersed PVA thin film (Fig. 19), which was yielded by counter-diffusion as described in relation to Example 29 of the aqueous solutions of chloroauric acid S465 for 96 hours, reveal the presence of ultrafine metal particles, demonstrating that, in the similar manner to the case of Example 23, an ultrafine-gold-particle-dispersed PVA thin film can be produced. However, the dispersion states of the ultrafine gold particles of the interior and the two surface sides of the thin film differed from that of the thin film produced in Example 23. Specifically, ultrafine gold particles were present primarily on the inside and the surface of the S465 aqueous solution side, and almost no ultrafine gold particles were present in the inside and the surface of the chloroauric acid aqueous solution side. Thus, there was obtained a polymer thin film containing ultrafine gold particles whose the number changes linearly between the two surfaces of the film.

### [Example 31]

The SEM images of the surface of the ultrafine-gold-particle-dispersed PVA thin film (Fig. 19) prepared in Example 30 show that ultrafine gold particles were present on the S465 side surface and virtually not present on the chloroauric acid side surface, supporting the results of the TEM observation. These results also support that the dispersion state of ultrafine gold particles in the ultrafine-gold-particle-dispersed PVA thin film depends on the method of counter-diffusion of chloroauric acid and S465.

### [Example 32]

In accordance with the manner described in Example 23, the PVA film was held as the diaphragm between the two cells of a glass twin-cell devise. Both cells were filled with a mixture of aqueous solutions of chloroauric acid (0.2 mM) and S465 (6 mM). Each of the mixtures in the cells were replaced by the fresh mixture every 24 hours. After elapse of 96 hours, the PVA thin film was removed and washed with water. The PVA thin film assumed a pale bluish purple color, and the wavelength of the peak of UV-VIS absorption spectrum of the thin film was longer than those of the films prepared by other methods (Method III of Fig. 12). The SEM images of the surface of the PVA thin film reveal the presence of ultrafine gold particles having an almost similar size (Fig. 20). These results show that ultrafine gold particles were formed on or in the vicinity of the surface of the PVA thin film and adsorbed onto the PVA thin film, suggesting strong affinity between the PVA thin film and ultrafine gold particles.

### [Example 33]

A mixture (1 ml) of an aqueous solution PVA (1 w/w%, 5 ml) and a colloidal solution of gold (10 ml) prepared from sodium chloroaurate aqueous solution (2 mM, 5 ml) and S465 aqueous solution (50 mM, 5 ml) was cast on a stainless-steel-made ring (diameter: 3 cm) placed in a petri dish, and the mixture was dried in a thermostatic air chamber (40°C) for 4 days, to thereby yield a thin film assuming a wine red color (Fig. 21a). The UV-VIS absorption spectrum (Fig. 22a) of the thin film show that ultrafine gold particles remain in the PVA thin film. The PVA thin film was successfully formed from PVA aqueous solution containing ultrafine gold particles, in the similar manner to the case of the formation of PVA thin film from PVA aqueous solution. In the present case, a network structure incorporating ultrafine gold particles in the film was formed. Thus, the ultrafine-gold-particle-dispersed PVA thin film in which ultrafine gold particles are dispersed was produced. When the PVA thin film assuming a wine red color was removed from the dish together with the ring, thoroughly washed with water, and allowed to stand for drying, the wine red color of the PVA thin film remained unchanged. This indicates that ultrafine gold particles remain in the PVA thin film, similarly to the case of Example 23, proving that ultrafine gold particles were successfully immobilized (carried) in the PVA thin film.

### [Example 34]

A colloidal solution of gold (1 ml) prepared from aqueous solutions of PVA (2 w/w%, 5 ml), sodium chloroaurate (5 mM, 5 ml), and S465 (200 mM, 5 ml) was cast on a stainless-steel-made ring (diameter: 3 cm) placed in a petri dish, and the solution was dried in a thermostatic air chamber (40°C) for 4 days, to thereby yield a thin film assuming a wine red color. Similarly to the case of Example 33, ultrafine-gold-particle-dispersed PVA thin film in which ultrafine gold particles are dispersed was produced. When the PVA thin film assuming a wine red color was removed from the dish together with the ring, thoroughly washed with water, and allowed to stand for drying, the wine red color of the PVA thin film remained unchanged. When a large volume of the colloidal solution of gold was employed, a thick film was obtained, whereas when a small volume of the colloidal solution of gold was employed, a thin film was obtained.

### [Example 35]

A mixture (1 ml) of aqueous solutions of sodium chloroaurate (5 mM, 5 ml), S465 (200 mM, 5 ml), and PVA (2 w/w%, 5 ml) was cast on a stainless-steel-made ring (diameter: 3 cm) placed in a petri dish, and the mixture was dried in a thermostatic air chamber (40°C) for 4 days, to thereby yield a thin film assuming a wine red color (Fig. 21b). The UV-VIS absorption spectrum of the PVA thin film (Fig. 22b) presented a peak at 530 nm. This demonstrates that a formation of ultrafine gold particles from sodium chloroaurate and S465 and a network formation of PVA simultaneously proceed. Thus, similarly to the cases of Examples 33 and 34, there was successfully produced an ultrafine-gold-particle-dispersed PVA thin film in which ultrafine gold particles are dispersed. When the PVA thin film assuming a wine red color was thoroughly washed with water and allowed to stand for drying, the wine red color of the PVA thin film remained unchanged. This indicates that ultrafine gold particles remain in the PVA thin film, proving that ultrafine gold particles were successfully immobilized (carried) in the PVA thin film. Taken together, it has now been confirmed that an ultrafine-gold-particle-dispersed PVA thin film can be produced in any of the following three cases: from a mixture of a colloidal solution of gold and PVA aqueous solution; from an ultrafine-gold-particle-dispersed PVA solution; or from a mixture of aqueous solutions of chloroauric acid, S465, and PVA.

### [Example 36]

The same sample solution as employed in Example 33, 34, or 35 was cast on a stainless-steel-made ring (diameter: 3 cm) placed in a petri dish, and the solution was dried in a thermostatic air chamber (60°C) for 4 days, to thereby yield a lace-like thin film assuming a wine red color (Fig. 21c). The UV-VIS absorption spectrum of the PVA thin film (Fig. 22c) shows a peak at 530 nm. Similarly to the cases of Example 33, 34, or 35, there was successfully produced an ultrafine-gold-particle-dispersed PVA thin film in which ultrafine gold particles are dispersed. Thus, it was found that by varying the drying temperature, thin films in various states were successfully produced.

### [Example 37]

A mixture (2 ml) of an aqueous solution of PVA (2 w/w%, 5 ml) and a colloidal solution of gold-silver alloy (10 ml) prepared from sodium chloroaurate aqueous solution (2 mM, 5 ml), silver nitrate aqueous solution (2 mM, 5 ml), and S465 aqueous solution (125 mM, 5 ml) was cast on a stainless-steel-made ring (diameter: 3 cm) placed in a petri dish, and the solution mixture was dried in a thermostatic air chamber (40°C) for 4 days, to thereby yield a thin film assuming a bluish wine red color. The UV-VIS absorption spectrum (Fig. 23a) of the thin film reveals that ultrafine gold-silver-alloy particles remained in the PVA thin film. Similarly to the case of the formation of a PVA thin film from PVA aqueous solution in Example 23, the PVA thin film was successfully formed from PVA aqueous solution containing ultrafine gold-silver alloy particles. In this case, a network structure incorporating ultrafine gold-silver alloy particles therein was formed. Thus, an ultrafine-gold-silver-alloy-particle-dispersed PVA thin film in which ultrafine gold-silver alloy particles are dispersed was produced. When the PVA thin film assuming a bluish wine red color was removed from the dish together with the ring, thoroughly washed with water, and allowed to stand for drying, the bluish wine red color of the PVA thin film remained unchanged. This indicates that ultrafine gold-silver alloy particles remain in the PVA thin film, similar to the case of Example 33, proving that ultrafine gold-silver alloy particles were successfully immobilized (carried) in the PVA thin film.

### [Example 38]

A colloidal solution of gold-silver alloy (2 ml) prepared from aqueous solutions of sodium chloroaurate (5 mM, 5 ml), silver nitrate (2 mM, 5 ml), S465 (125 mM, 5 ml), and PVA (2 w/w%, 5 ml) was cast on a stainless-steel-made ring (diameter: 3 cm) placed in a petri dish, and the solution was dried in a thermostatic air chamber (40°C) for 4 days, to thereby yield a thin film assuming a bluish wine red color. The UV-VIS absorption spectrum (Fig. 23b) of the thin film reveals that ultrafine gold-silver-alloy particles remained in the PVA thin film. Similarly to the case of Example 37, an ultrafine-gold-silver-alloy-particle-dispersed PVA thin film in which ultrafine gold-silver alloy particles are dispersed was produced. When the PVA thin film assuming a bluish wine red color was removed from the dish together with the ring, thoroughly washed with water, and allowed to stand for drying, the bluish wine red color of the PVA thin film remained unchanged. When a large volume of the colloidal solution of gold-silver alloy was employed, a thick film was obtained, whereas when a small volume of the colloidal solution of gold-silver alloy was employed, a thin film was obtained.

### [Example 39]

A mixture (2 ml) of aqueous solutions of sodium chloroaurate (2 mM, 5 ml), silver nitrate (2 mM, 5 ml), S465 (40 mM, 10 ml), and PVA (2 w/w%, 10 ml) was cast on a stainless-steel-made ring (diameter: 3 cm) placed in a petri dish, and the solution was dried in a thermostatic air chamber (40°C) for 4 days, to thereby yield a thin film assuming a bluish wine red color. The UV-VIS absorption spectrum of the PVA thin film (Fig. 23c) presented a peak at 540 nm. Similarly to the case of Example 37, an ultrafine-gold-silver-alloy-particle-dispersed PVA thin film in which ultrafine gold-silver alloy particles are dispersed was produced. When the PVA thin film assuming a bluish wine red color was removed from the dish together with the ring, thoroughly washed with water, and allowed to stand for drying, the bluish wine red color of the PVA thin film remained unchanged. This indicates that ultrafine gold-silver alloy particles remained in the PVA thin film and ultrafine gold-silver alloy particles were successfully immobilized (carried) in the PVA thin film. Taken together, it has now been confirmed that an ultrafine-gold-silver-alloy-particle-dispersed PVA thin film can be produced in any of the following three cases: from a mixture of colloidal solution gold-silver alloy and PVA aqueous solution; from an ultrafine-gold-silver-alloy-particle-dispersed PVA solution; or from a mixture of aqueous solutions of chloroauric acid, silver nitrate, S465, and PVA.

### [Example 40]

The same sample solution as employed in Example 37, 38, or 39 was cast on a stainless-steel-made ring (diameter: 3 cm) placed in a petri dish, and the solution was dried in a thermostatic air chamber (60°C) for 4 days, to thereby produce a lace-like thin film assuming a bluish wine red color, from each of sample solutions. Similarly to the case of Example 37, 38, or 39, an ultrafine-gold-silver-alloy-particle-dispersed PVA thin film in which ultrafine gold-silver alloy particles are dispersed was produced. Thus, it was found that by varying the drying temperature, thin films in various states were successfully produced.

### [Example 41]

The ultrafine-gold-particle-dispersed PVA thin film with the ring (Fig. 24a) prepared in Example 35 was immersed in water and then was pulled up from water (Fig. 24b). After water was removed from the thin film, the thin film was immersed in acetone and then was pulled up from acetone (Fig. 24c). After acetone was removed from the thin film, the thin film was naturally dried on a petri dish (Fig. 24d). The swelling/shrinking phenomenon of the resultant ultrafine-gold-particle-dispersed PVA thin film by the mediation of water is identical to that of ultrafine-gold-particle-dispersed PVA gel observed in Example 18. Thus, the ultrafine-gold-particle-dispersed PVA thin film was found to be an ultrafine-gold-particle-dispersed PVA gel thin film.

### [Example 42]

The ultrafine-gold-particle-dispersed PVA gel thin film prepared in Example 35 was treated with water and then acetone, and the resultant thin film was observed under an optical microscope (Fig. 25). A thin portion of the gel thin film was observed to have a structure in which the sheets having pores of micrometer size (100 µm or less) were laminated one on another.

### [Example 43]

The SEM images of the surface of the ultrafine-gold-particle-dispersed PVA gel thin film prepared in Example 35 are shown in Fig. 26. Since the gel thin film was prepared by casting on a petri dish, the SEM images for both surfaces of the film; i.e., the surface of the film at the interface between the film and the petri dish (lower Figs.) and the surface of the film at the interface between air and the film (upper Figs.), were observed. The SEM images show that the gel thin film has a multi-layered structure of very thin porous sheets. White small dots indicate ultrafine gold particles. The optical microscope images obtained in Example 42 and the SEM images reveal that many ultrathin films with micro-pores are laminated one on another forming the thin film.

### [Example 44]

Fig. 27 shows an energy dispersive X-ray spectrum of the white small dots observed in the SEM images of the surface of the ultrafine-gold-particle-dispersed PVA gel thin film described in Example 43. The peaks correspond to the characteristic X-ray of gold. Accordingly, the small white dots dispersed in the gel thin film were identified as atomic gold. Thus, it was found that ultrafine gold particles are dispersed in the ultrathin film.

### [Example 45]

Fig. 28 shows a transmission FT-IR spectrum chart of the ultrafine-gold-particle-dispersed PVA gel thin film prepared in Example 35 and a total reflection FT-IR spectrum (ATR FT-IR spectrum) chart of the surface thereof. Chart (A) is drawn to a cast PVA film prepared from PVA aqueous solution (1 w/w%) observed through transmission FT-IR, chart (B) is drawn to the ultrafine-gold-particle-dispersed PVA gel thin film through observed through transmission FT-IR, and chart (C) is drawn to the surface of the ultrafine-gold-particle-dispersed PVA gel thin film observed through total reflection FT-IR. The charts (B and C) of the PVA gel thin film show considerably high peaks in the vicinity of 2900 cm⁻¹ and 1100 cm⁻¹, as compared with chart (A). These peaks were attributed to stretching of polyethylene oxide chains (-CH₂ moiety and -CH₂-O-CH₂- moiety) contained in S465. The peaks observed at 1352 cm⁻¹ and 887 cm⁻¹ in the chart (C) emerged through the surface enhancement of ultrafine gold particles and are attributed to the vibration of >CH-O-O-H moiety and -O-O- moiety, suggesting that the PVA gel thin film contains polyethylene oxide chains in its interior.

### [Example 46]

Fig. 29 shows the total reflection FT-IR spectrum (ATR FT-IR spectrum) charts of the surface of the ultrafine-gold-particle-dispersed PVA gel thin film prepared in Example 35. Chart (A) is drawn to the gel thin film that looked dry, chart (B) is drawn to the gel thin film after immersion in water, and chart (C) is drawn to the gel thin film after immersion in ethanol. As is apparent from Fig. 29, the hydrogen bonding attributed to water or ethanol results in shifts in spectrum.

### [Example 47]

Fig. 30 shows a laser Raman spectrum chart of the surface of the ultrafine-gold-particle-dispersed PVA gel thin film prepared in Example 35. Curve (A) is drawn to ultrafine-gold-particle-dispersed PVA gel, and curve (B) is drawn to the ultrafine-gold-particle-dispersed PVA gel thin film. As compared with the curve of the ultrafine-gold-particle-dispersed PVA gel, the Raman band is seen in the vicinity of 1500 cm⁻¹ through surface enhancement in the spectrum of the ultrafine-gold-particle-dispersed PVA gel thin film.

### [Example 48]

In the similar manner to that described in relation to Example 35, an ultrafine-gold-particle-dispersed PVA gel thin film was produced from a mixture of sodium chloroaurate aqueous solution (2 mM, 5 ml), S465 aqueous solution (50 mM, 5 ml), and PVA aqueous solution (2 w/w%, 5 ml). The gel thin film (1.5 ml) was formalized. The resultant gel thin film did not change externally. As also shown in the UV-VIS absorption spectrum (Fig. 31) of the gel thin film, the nature of the film was not affected by the formalization.

### [Example 49]

Fig. 32 contains the photographs of swelling and shrinking of the ultrafine-gold-particle-dispersed PVA gel thin film prepared in Example 35 under the microgravity created by falling for a short period of time. Numerical figures provided at the lower left of respective photographs indicate time (unit: second) elapsed from the starting of falling. The legends "Before falling" and "After falling" indicate corresponding situations under gravity. The PVA gel thin film with a stainless-steel ring was suspended in a test tube. The test tube was filled with water so that the water almost reached the ring. The gel thin film swelled in the water. One minute before falling, a part of water contained in the test tube was removed from. By this removal, the gel thin film made contact with air and diminished in size. During falling, the gel thin film was greatly swollen, producing a bubble in the water. After falling, the gel thin film shrunk. These results indicate that the ultrafine-gold-particle-dispersed gel thin film is quickly and reversibly swollen and shrunken by the mediation of water.

### [Example 50]

The swelling and shrinking of the ultrafine-gold-particle-dispersed PVA gel thin film prepared in Example 35 were observed under various conditions (Fig. 33): (a) water/ultrafine-gold-particle-dispersed PVA gel thin film/air system, (b) acetone/ultrafine-gold-particle-dispersed PVA gel thin film/air system, (c) water/ultrafine-gold-particle- dispersed PVA gel thin film/water system, and (d) acetone/ultrafine-gold-particle-dispersed PVA gel thin film/water system. The legends "Before falling" and "After falling" indicate corresponding situations under gravity and under microgravity, respectively. As shown in (b), the volume of acetone contained in the left glass cell was reduced and the same volume of acetone to the reduced volume of acetone was transferred onto the right glass cell. It was shown that acetone did not leak outside the cells, but acetone passed through the ultrafine-gold-particle-dispersed PVA gel thin film. In the case of (a), a slight amount of water contained in the left glass cell transferred onto the right glass cell. These results indicate that through the pores of the ultrafine-gold-particle-dispersed PVA gel thin film described in Examples 42 and 43 small molecules can transfer from one surface of the film to the other surface of the film], and that the gel thin film swells in water, reducing pores in size, whereas the gel thin film shrunk in acetone rather than swelling, increasing pores in size and allowing acetone to pass easily through the pores compared with water.

### [Example 51]

A mixture (1 ml) of sodium chloroaurate aqueous solution (1 mM, 5 ml), S465 aqueous solution (40 mM, 5 ml), and HPC aqueous solution (2 w/w%, 5 ml) was cast on a stainless-steel-made ring (diameter: 3 cm) placed in a petri dish, and the solution was dried in a thermostatic air chamber (40°C) for 4 days. Similarly to the case of PVA, a thin film assuming a wine red color was produced (Fig. 21d). The UV-VIS absorption spectrum (Fig. 34b) of the thin film showed a peak in the vicinity of 530 nm, in the similar manner to the case of colloidal gold produced in Example 22 (Fig. 34a) and the case of the ultrafine-gold-particle-dispersed PVA thin film produced in Example 35. These results indicate that a thin film carrying ultrafine gold particles can be produced by use of HPC, as was the case of PVA.

### [Example 52]

The microphotographs (Fig. 35) from polarizing microscopy and the CD spectrum (Fig. 36) of a cast HPC thin film produced from an aqueous HPC solution reveal that the HPC thin film has a cholesteric liquid crystal structure, and when formalization was performed for rendering the HPC thin film insoluble to water, the film maintains the liquid crystal structure. Through use of a formalized HPC thin film instead of a PVA thin film, the procedure described in relation to Example 14 was performed for counter-diffusion of sodium chloroaurate and S465. Specifically, an aqueous solution of HPC (5 w/w%, 7 ml) was cast on a petri dish (diameter: 6 cm), and the solution was left to stand in a thermostatic air chamber (40°C) for 1 week, to thereby form a cast film. The resultant film was formalized to thereby yield a water-insoluble HPC thin film. Counter-diffusion of chloroauric acid aqueous solution (0.2 mmol/kg) and S465 aqueous solution (6 mol/kg) were allowed to proceed from both sides of the HPC thin film. With increasing time, the HPC thin film gradually assumed a wine red color. The UV-VIS absorption spectrum (Fig. 34c) of the HPC thin film reveals the formation of ultrafine gold particles in the HPC thin film, and the ultrafine-gold-particle-dispersed HPC thin film was successfully produced.

### [Example 53]

The TEM image (Fig. 37) of the cross section of the ultrafine-gold-particle-dispersed HPC thin film prepared in Example 52 reveals the formation of ultrafine gold particles in rod shape, ellipsoid shape, or rugby ball shape, other than true spherical shape. It was found that the shape of ultrafine gold particles is affected by the state of the medium, in this case, the liquid crystal state.

### [Example 54]

The SEM images (Fig. 38) of the surface of the ultrafine-gold-particle-dispersed HPC thin film prepared in Example 52 show that particles of two different but mutually uniform sizes are adsorbed on the surface.

## Claims

1. A method for producing an ultrafine-metal-particle-dispersed polymer solution, **characterized by** comprising reacting, in a solution containing a polymer, a transition metal ion species with a nonionic surfactant having an ethylene moiety and/or an acetylene moiety.

2. A method for producing a concentrated ultrafine-metal-particle-dispersed solution comprising employing an ultrafine-metal-particle-dispersed polymer solution as recited in claim 1 as a raw material.

3. A method for producing an ultrafine-metal-particle-dispersed polymer gel comprising employing an ultrafine-metal-particle-dispersed polymer solution as recited in claim 1 as a raw material.

4. A method for producing an ultrafine-metal-particle-dispersed polymer thin film and an ultrafine-metal-particle-dispersed polymer gel thin film comprising employing an ultrafine-metal-particle-dispersed polymer solution as recited in claim 1 as a raw material.

5. A method for producing a concentrated ultrafine-metal-particle-dispersed polymer solution, **characterized by** comprising reacting, in a solution containing a polymer, a transition metal ion species with a nonionic surfactant having an ethylene moiety and/or an acetylene moiety.

6. A method for producing an ultrafine-metal-particle-dispersed polymer gel, **characterized by** comprising reacting, in a solution containing a polymer, a transition metal ion species with a nonionic surfactant having an ethylene moiety and/or an acetylene moiety.

7. A method for producing an ultrafine-metal-particle-dispersed polymer thin film and an ultrafine-metal-particle-dispersed polymer gel thin film, **characterized by** comprising reacting, in a solution containing a polymer, a transition metal ion species with a nonionic surfactant having an ethylene moiety and/or an acetylene moiety.

8. A method for producing an ultrafine-metal-particle-dispersed polymer thin film or an ultrafine-metal-particle-dispersed polymer gel thin film, **characterized by** comprising reacting, on a substrate, a polymer, a transition metal ion species, and a nonionic surfactant having an ethylene moiety and/or an acetylene moiety.

9. A method for producing a concentrated ultrafine-metal-particle-dispersed solution comprising employing, as raw materials, a polymer solution and one or more ultrafine-metal-particulate solutions each having been formed by reacting a transition metal ion species with a nonionic surfactant having an ethylene moiety and/or an acetylene moiety.

10. A method for producing an ultrafine-metal-particle-dispersed polymer gel comprising employing, as raw materials, a polymer solution and one or more ultrafine-metal-particulate solutions each having been formed by reacting a transition metal ion species with a nonionic surfactant having an ethylene moiety and/or an acetylene moiety.

11. A method for producing an ultrafine-metal-particle-dispersed polymer thin film or an ultrafine-metal-particle-dispersed polymer gel thin film comprising employing, as raw materials, a polymer solution and one or more ultrafine-metal-particulate solutions each having been formed by reacting a transition metal ion species with a nonionic surfactant having an ethylene moiety and/or an acetylene moiety.

12. A method for producing an ultrafine-metal-particle-dispersed polymer thin film or an ultrafine-metal-particle-dispersed polymer gel thin film in which ultrafine metal particles are dispersed on a surface and/or in an inside comprising reacting, in a solvent and in the presence of a polymer thin film or polymer gel thin film, a transition metal ion species with a nonionic surfactant having an ethylene moiety and/or an acetylene moiety.

13. A method for producing an ultrafine-metal-particle-dispersed polymer thin film or an ultrafine-metal-particle-dispersed polymer gel thin film in which ultrafine metal particles are dispersed on a surface and/or in an inside comprising placing a polymer thin film or gel film in one or more ultrafine-metal-particulate solutions each having been formed by reacting a transition metal ion species with a nonionic surfactant having an ethylene moiety and/or an acetylene moiety.

14. A method for producing an ultrafine-metal-particle-dispersed polymer thin film or an ultrafine-metal-particle-dispersed polymer gel thin film in which ultrafine metal particles are dispersed on a surface and/or in an inside, **characterized by** comprising subjecting a transition metal ion species and a nonionic surfactant having an ethylene moiety and/or an acetylene moiety to counter-diffusion from both sides of a polymer thin film or polymer gel thin film, thereby causing reaction in the thin film, on a surface of the thin film, or in the vicinity of a surface of the thin film.

15. A method as described in claim 14, wherein, in the obtained ultrafine-metal-particle-dispersed polymer thin film or ultrafine-metal-particle-dispersed polymer gel thin film, the ultrafine metal particles are present on one or both surface sides of the polymer thin film or polymer gel thin film, the only inside of the polymer thin film or polymer gel thin film, or on one or both surface sides and the inside of the polymer thin film or polymer gel thin film; and the ultrafine metal particles are dispersed in each portion with homogeneity, non-homogeneity, or concentration gradation, thereby providing a particle distribution symmetric or unsymmetric with respect to a surface of film.

16. A method for producing an ultrafine-metal-particle-dispersed polymer thin film or an ultrafine-metal-particle-dispersed polymer gel thin film as described in claims 12 to 15, wherein the polymer thin film or polymer gel thin film is in a liquid crystal state.

17. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in claims 1 to 16, wherein reaction is performed under microgravity or non-gravity.

18. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in any one of claims 1 to 17, wherein the polymer comprises one or more species selected from among vinyl polymers, aramid polymers, poly(vinyl alcohol), poly(N-vinylcarbazole), poly(vinylpyridine), polypyrrole, polyphenyl polymers, poly(phenylene sulfide), poly(vinylidene fluoride), poly(methyl methacrylate), polymethylene polymers, polyimidazole, polyimide, polystyrene, olefin polymers, elastomers, engineering polymers, polyolfein, polyester, polycarbonate, engineering plastics, epoxy polymers, phenolic polymers, polyurethane, polydinene polymers, acrylic polymers, polyacrylamide, polyamide, polyacetal, polyether, polyacetylene, polyaniline, polyisobutylene, polyisoprene, poly(ethylene terephthalate), polyene polymers, poly(vinylidene chloride), poly(vinyl chloride), polycarbonate, poly(vinyl acetate), polypropylene, ethylene polymers, ion-exchange resins, silicone derivatives, agarose, gellan gum, cellulose polymers, dextran, dextrin, alginate salts, hyaluronate salts, poly(glutamic acid), poly(lysine), chitosan, lignin, carageenan, silk fibroin, agar, gelatin, derivatives thereof, copolymers obtained from one or more species selected from among the polymers and/or polymer derivatives, polymer-polymer complexes, polymer alloys, polymer blends, and polymer composites.

19. A method for producing an ultrafine-metal-particle-dispersed polymer solution as described in claim 1 or 17, wherein the polymer is poly(vinyl alcohol) or a mixture of poly(vinyl alcohol) and polyethylene glycol.

20. A method for producing a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in any one of claims 5 to 11 and claim 17, wherein the polymer is poly(vinyl alcohol) or a poly(vinyl alcohol)-polyethylene glycol mixture.

21. A method for producing an ultrafine-metal-particle-dispersed polymer thin film as described in any one of claims 12 to 15 and claim 17, wherein the polymer forming the polymer thin film is poly(vinyl alcohol) or a poly(vinyl alcohol)-polyethylene glycol mixture.

22. A method for producing an ultrafine-metal-particle-dispersed polymer thin film as described in any one of claims 12 to 15 and claim 17, wherein the polymer thin film is a formalized thin film of poly(vinyl alcohol) or a formalized thin film of a poly(vinyl alcohol)-polyethylene glycol mixture.

23. A method for producing an ultrafine-metal-particle-dispersed polymer gel thin film as described in any one of claims 12 to 15 and claim 17, wherein the polymer forming the polymer gel thin film is poly(vinyl alcohol) or a poly(vinyl alcohol)-polyethylene glycol mixture.

24. A method for producing an ultrafine-metal-particle-dispersed polymer gel thin film as described in any one of claims 12 to 15 and claim 17, wherein the polymer gel thin film comprises a poly(vinyl alcohol) gel or a poly(vinyl alcohol)-polyethylene glycol complex gel which is produced through γ-ray radiation, a glutaraldehyde method, or a freeze-thawing method.

25. A method for producing an ultrafine-metal-particle-dispersed polymer thin film or an ultrafine-metal-particle-dispersed polymer gel thin film as described in claim 16, wherein the polymer thin film or the polymer gel thin film in a liquid crystal state is produced from, as a raw material, a cellulose derivative polymer.

26. A method for producing an ultrafine-metal-particle-dispersed polymer thin film or an ultrafine-metal-particle-dispersed polymer gel thin film as described in claim 25, wherein the polymer thin film or the polymer gel thin film in a liquid crystal state is produced from, as a raw material, hydroxypropyl cellulose.

27. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in any one of claims 1 to 17, wherein the transition metal ion species is selected from the group consisting of scandium-group elements (Sc, Y, La, and Ac); titanium-group elements (Ti, Zr, and Hf); vanadium-group elements (V, Nb, and Ta); chromium-group elements (Cr, Mo, and W); manganese-group elements (Mn, Tc, and Re); iron-group elements (Fe, Ru, and Os); cobalt-group elements (Co, Rh, and Ir); nickel-group elements (Ni, Pd, and Pt); and copper-group elements (Cu, Ag, and Au).

28. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in claim 27, wherein the transition metal ion species is an ion of a noble metal complex (a platinum complex, a palladium complex, a rhodium complex, an iridium complex, a ruthenium complex, an osmium complex, a silver complex, a gold complex, or a non-stiochiometric compound).

29. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in claim 27, wherein the transition metal ion species is an ion of a noble metal organic compound (an alkyl complex, an aryl complex, a metallacycle complex, a carbene complex, an olefin complex, an arene complex, an η-aryl complex, a cyclopentadienyl complex, a hydrido complex, a carbonyl complex, an oxo complex, or a nitrogen complex).

30. A method for producing an ultrafine-metal-particle-dispersed polymer solution, a concentrated ultrafine-metal-particle-dispersed polymer solution on, an ultrafine-metal-particle-dispersed polymer gel, an ultrafine-metal-particle-dispersed polymer thin film, or an ultrafine-metal-particle-dispersed polymer gel thin film as described in claim 27, wherein a first transition metal ion species is silver(I) ion.

31. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in claim 27, wherein a first transition metal ion species is an ion of a gold complex (dihalogenoaurate(I), dicyanoaurate(I), bis(thiosulfato)aurate(I), tetrahalogenoaurate(III), tetracyano(III), tetranitrato(III), or tetrathiocyanato(III)).

32. A method for producing an ultrafine-metal-particle-dispersed polymer solution, an ultrafine-metal-particle-dispersed polymer thick solution, an ultrafine-metal-particle-dispersed polymer gel, an ultrafine-metal-particle-dispersed polymer thin film, or an ultrafine-metal-particle-dispersed polymer gel thin film as described in claim 31, wherein a first transition metal ion species is a tetrahalogenoaurate(III) ion.

33. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in claim 27, wherein a first and second transition metal ion species are a tetrahalogenoaurate(III) ion and silver(I)ion.

34. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer thin film, or an ultrafine-metal-particle-dispersed polymer gel thin film as described in any one of claims 1 to 17, wherein the nonionic surfactant having an ethylene moiety and/or an acetylene moiety is an acetylene-glycol nonionic surfactant.

35. A method for producing an ultrafine-metal-particle-dispersed polymer solution, a concentrated ultrafine-metal-particle-dispersed polymer solution, an ultrafine-metal-particle-dispersed polymer gel, an ultrafine-metal-particle-dispersed polymer gel thin film, or an ultrafine-metal-particle-dispersed polymer thin film as described in claim 34, wherein the acetylene-glycol nonionic surfactant is α,α'-[2,4,7,9-tetramethyl-5-undecene -4,7-diyl]bis[ω-hydroxy-polyoxyethylene].

36. An ultrafine-silver-particle-dispersed poly(vinyl alcohol) solution produced by reacting, in an aqueous solution of poly(vinyl alcohol) or a poly(vinyl alcohol)-polyethylene glycol mixture, silver(I) ion with α,α'-[2,4,7,9-tetramethyl-5-undecene-4,7-diyl]bis[ω-hydroxy-polyoxyethylene].

37. A concentrated ultrafine-silver-particle-dispersed poly(vinyl alcohol) solution, an ultrafine-silver-particle-dispersed poly(vinyl alcohol) gel, an ultrafine-silver-particle-dispersed poly(vinyl alcohol) gel thin film, or an ultrafine-silver-particle-dispersed poly(vinyl alcohol) thin film produced by heating an ultrafine-silver-particle-dispersed poly(vinyl alcohol) solution as recited in claim 36.

38. A concentrated ultrafine-silver-particle-dispersed poly(vinyl alcohol) solution, an ultrafine-silver-particle-dispersed poly(vinyl alcohol) gel, an ultrafine-silver-particle-dispersed poly(vinyl alcohol) gel thin film, or an ultrafine-silver-particle-dispersed poly(vinyl alcohol) thin film produced by reacting, in poly(vinyl alcohol) aqueous solution or a poly(vinyl alcohol)-polyethylene glycol mixture, silver(I) ion with α,α'-[2,4,7,9-tetramethyl-5-undecene-4,7-diyl]bis[ω-hydroxy-polyoxyethylene].

39. An ultrafine-gold-particle-dispersed poly(vinyl alcohol) solution produced by reacting, in an aqueous solution of poly(vinyl alcohol) or a poly(vinyl alcohol)-polyethylene glycol mixture, a tetrahalogenoaurate(III) ion with α,α'-[2,4,7,9-tetramethyl-5-undecene-4,7-diyl]bis[ω-hydroxy-polyoxyethylene).

40. A concentrated ultrafine-gold-particle-dispersed poly(vinyl alcohol) solution, an ultrafine-gold-particle-dispersed poly(vinyl alcohol) gel, an ultrafine-gold-particle-dispersed poly(vinyl alcohol) gel thin film, or an ultrafine-gold-particle-dispersed poly(vinyl alcohol) thin film produced by heating an aqueous ultrafine-gold-particle-dispersed poly(vinyl alcohol) solution or a poly(vinyl alcohol)-polyethylene glycol mixture as recited in claim 39.

41. A concentrated ultrafine-gold-particle-dispersed poly(vinyl alcohol) solution, an ultrafine-gold-particle-dispersed poly(vinyl alcohol) gel, an ultrafine-gold-particle-dispersed poly(vinyl alcohol) gel thin film, or an ultrafine-gold-particle-dispersed poly(vinyl alcohol) thin film produced by reacting, in an aqueous poly(vinyl alcohol) solution or or a poly(vinyl alcohol)-polyethylene glycol mixture, a tetrahalogenoaurate(III) ion with α,α'-[2,4,7,9-tetramethyl-5-undecene-4,7-diyl]bis[ω-hydroxy-polyoxyethylene].

42. An ultrafine-gold-silver-alloy-particle-dispersed poly(vinyl alcohol) solution produced by reacting, in an aqueous solution of poly(vinyl alcohol) or a poly(vinyl alcohol)-polyethylene glycol mixture, silver(I)ion and a tetrahalogenoaurate(III) ion with α,α'-[2,4,7,9-tetramethyl-5-undecene-4,7-diyl]bis[ω-hydroxy-polyoxyethylene].

43. A concentrated ultrafine-gold-silver-alloy-particle-dispersed poly(vinyl alcohol) solution, an ultrafine-gold-silver-alloy-particle-dispersed poly(vinyl alcohol) gel, an ultrafine-gold-silver-alloy-particle-dispersed poly(vinyl alcohol) gel thin film, or an ultrafine-gold-silver-alloy-particle-dispersed poly(vinyl alcohol) thin film produced by heating an ultrafine-silver-particle-dispersed poly(vinyl alcohol) solution as recited in claim 36 and an ultrafine-gold-particle-dispersed poly(vinyl alcohol) solution as recited in claim 39 or heating an ultrafine-gold-silver-alloy-particle-dispersed poly(vinyl alcohol) solution as recited in claim 42.

44. A concentrated ultrafine-gold-silver-alloy-particle-dispersed poly(vinyl alcohol) solution, an ultrafine-gold-silver-alloy-particle-dispersed poly(vinyl alcohol) gel, an ultrafine-gold-silver-alloy-particle-dispersed poly(vinyl alcohol) gel thin film, or an ultrafine-gold-silver-alloy-particle-dispersed poly(vinyl alcohol) thin film produced by reacting, in an aqueous poly(vinyl alcohol) solution or a mixture of aqueous solutions of poly(vinyl alcohol) and polyethylene glycol, silver(I)ion and a tetrahalogenoaurate(III) ion with α,α'-[2,4,7,9-tetramethyl-5-undecene-4,7-diyl]bis[ω-hydroxy-polyoxyethylene].

45. A gel or a thin film produced from a shape-changed gel or gel thin film obtained by varying formation temperature during production, as recited in claim 41 or 44, of an ultrafine-gold-particle-dispersed poly(vinyl alcohol) gel, an ultrafine-gold-particle-dispersed poly(vinyl alcohol) gel thin film, an ultrafine-gold-silver-alloy-particle-dispersed poly(vinyl alcohol) gel, or an ultrafine-gold-silver-alloy-particle-dispersed poly(vinyl alcohol) gel thin film.

46. A aggregated gel of numerous gel fragments comprising an ultrafine-gold-particle-dispersed poly(vinyl alcohol) gel or an ultrafine-gold-silver-alloy-particle-dispersed poly(vinyl alcohol) gel produced by controlling the formation temperature as recited in claim 45 to a temperature higher than a phase transition temperature.

47. A lace-like gel thin film which is stretchable and comprises an ultrafine-gold-particle-dispersed poly(vinyl alcohol) gel or an ultrafine-gold-silver-alloy-particle-dispersed poly(vinyl alcohol) gel produced by controlling the formation temperature as recited in claim 45 to a temperature higher than a phase transition temperature.

48. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described in claim 40, 41, 43, or 44, in which a large number of micropores are provided on the surface and/or the inside.

49. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described in claim 40, 41, 43, or 44, wherein a large number of micropores (diameter: 50 µm or less) are provided and ultrathin films (thickness: 1 µm (1,000 nm) or less) in which a large number of ultrafine gold particles or gold-silver particles are dispersed, thereby forming a multilayer structure.

50. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described in claim 40, 41, 43, or 44, which has a structure in which a large number of stretchable, thread-like or string-like fiber filaments of different length are entangled, ultrafine gold particles or ultrafine gold-silver-alloy particles being dispersed in the fiber filaments.

51. An ultrafine-gold-particle-dispersed poly(vinyl alcohol) thin film or an ultrafine-gold-particle-dispersed poly(vinyl alcohol)-polyethylene glycol mixture thin film in which ultrafine gold particles are present in the inside and/or on the surface of the thin film, the thin film being produced through a method as recited in claim 12, wherein a tetrahalogenoaurate(III) ion is reacted with α,α'-[2,4,7,9-tetramethyl-5-undecene-4,7-diyl]bis[ω-hydroxy-polyoxyethylene] in the presence of a poly(vinyl alcohol) thin film or a poly(vinyl alcohol)-polyethylene glycol mixture thin film which has been formalized to be insoluble in water.

52. An ultrafine-gold-particle-dispersed poly(vinyl alcohol) thin film or an ultrafine-gold-particle-dispersed poly(vinyl alcohol)-polyethylene glycol mixture thin film in which ultrafine gold particles are present in the inside and/or on the surface of the thin film, the thin film being produced through a method as recited in claim 13, wherein a poly(vinyl alcohol) thin film or a poly(vinyl alcohol)-polyethylene glycol mixture thin film which has been formalized to be insoluble in water is placed in an ultrafine-gold-particulate solution formed by reacting a tetrahalogenoaurate(III) ion with α,α'-[2,4,7,9-tetramethyl-5-undecene-4,7-diyl]bis[ω-hydroxy-polyoxyethylene] and allowing the thin film to stand.

53. An ultrafine-gold-particle-dispersed poly(vinyl alcohol) thin film or an ultrafine-gold-particle-dispersed poly(vinyl alcohol)-polyethylene glycol mixture thin film in which ultrafine gold particles formed in the inside, on the surface, or in the vicinity of the thin film are present in the inside and/or on the surface of the thin film in a variety of dispersion state and distribution profile, the thin film being produced through a method as recited in claim 14 or 15, wherein a tetrahalogenoaurate(III) ion and α,α'-[2,4,7,9-tetramethyl-5-undecene-4,7-diyl]bis[ω-hydroxy-polyoxyethylene] are separately placed on both sides a poly(vinyl alcohol) thin film or a poly(vinyl alcohol)-polyethylene glycol mixture thin film which has been formalized to be insoluble in water.

54. Ultrafine gold particles taking a variety of forms in film produced through the method as recited in claim 14, wherein a tetrahalogenoaurate(III) ion and α,α'-[2,4,7,9-tetramethyl-5-undecene-4,7-diyl]bis[ω-hydroxy-polyoxyethylene] are separately placed on both sides a polymer (hydroxypropyl cellulose) thin film in a liquid crystal state.

55. A production method or product as described in claims 1 to 54, wherein the formed ultrafine silver particles, ultrafine gold particles, or ultrafine metal particles have a crystal structure of single-element or alloy (solid solution, inter-metallic compound, eutectic mixture) or a core-shell structure.

56. An ultrafine-gold-particle-dispersed poly(vinyl alcohol) gel or an ultrafine-gold-silver-alloy-particle-dispersed poly(vinyl alcohol) gel as described in claim 40 or 43 produced by the steps of heating ultrafine-gold-particle-dispersed poly(vinyl alcohol) solution or an ultrafine-gold-silver-alloy-particle-dispersed poly(vinyl alcohol) solution at a temperature higher than a phase transition temperature (cloud point), to thereby separate the solution into a transparent layer and a turbid layer; and, in the turbid layer (under hydrophobic circumstances), cross-linking polyethylene oxide included in α,α'-[2,4,7,9-tetramethyl-5-undecene-4,7-diyl]bis[ω-hydroxy-polyoxyethylene] with poly(vinyl alcohol) and/or polyethylene glycol in the presence of ultrafine gold particles or ultrafine gold-silver alloy particles acting as a catalyst, to thereby form a network-structured gel being insoluble in water while the gel contains ultrafine gold particles or ultrafine gold-silver alloy particles, the steps carried out under gravity, microgravity or non-gravity.

57. An ultrafine-gold-particle-dispersed poly(vinyl alcohol) gel or an ultrafine-gold-silver-alloy-particle-dispersed poly(vinyl alcohol) gel as described in claims 41 and 44 to 47 produced by the steps of heating a mixture of aqueous solutions of α,α'-[2,4,7,9-tetramethyl-5-undecene-4,7-diyl]bis[ω-hydroxy-polyoxyethylene] and poly(vinyl alcohol) at a temperature higher than a phase transition temperature (cloud point), to thereby separate the solution into a transparent layer and a turbid layer; and, in a turbid layer (under hydrophobic circumstances), reacting the surfactant with a tetrahalogenoaurate(III) ion or silver(I)ion and a tatrahalogenoaurate(III) ion, to thereby initially form ultrafine gold particles or ultrafine gold-silver alloy particles; and cross-linking polyethylene oxide (polyethylene glycol) in the surfactant with poly(vinyl alcohol) in the presence of ultrafine gold particles or ultrafine gold-silver alloy particles acting as a catalyst, to thereby form a network-structured gel being insoluble in water while the gel contains ultrafine gold particles or ultrafine gold-silver alloy particles, the steps carried out under gravity, microgravity, or non-gravity.

58. An ultrafine-gold-particle-dispersed poly(vinyl alcohol) gel thin film or an ultrafine-gold-silver-alloy-particle-dispersed poly(vinyl alcohol) gel thin film as described in claim 40 or 43 produced by the steps of gradually evaporating water contained in an ultrafine-gold-particle-dispersed poly(vinyl alcohol) solution, an ultrafine-gold-particle-dispersed poly(vinyl alcohol)-polyethylene glycol mixture solution, an ultrafine-gold-silver-alloy-particle-dispersed poly(vinyl alcohol) solution, or an ultrafine-gold-silver-alloy-particle-dispersed poly(vinyl alcohol)-polyethylene glycol mixture solution cast in a vessel having a large surface area; and cross-linking polyethylene oxide included in α,α'-[2,4,7,9-tetramethyl-5-undecene-4,7-diyl]bis[ω-hydroxy-polyoxyethylene] with poly(vinyl alcohol) and/or polyethylene glycol in the presence of ultrafine gold particles or ultrafine gold-silver alloy particles acting as a catalyst, to thereby form a network-structured gel being insoluble in water while the gel film contains ultrafine gold particles or ultrafine gold-silver alloy particles, the steps carried out under gravity, microgravity, or non-gravity.

59. An ultrafine-gold-particle-dispersed poly(vinyl alcohol) gel thin film or an ultrafine-gold-silver-alloy-particle-dispersed poly(vinyl alcohol) gel thin film as described in claim 41 or 44 produced by the steps of gradually evaporating water contained in a mixture of aqueous solutions of poly(vinyl alcohol) or poly(vinyl alcohol)-polyethylene glycol mixture cast in a vessel having a large surface area; reacting α,α'-[2,4,7,9-tetramethyl-5-undecene-4,7-diyl]bis[ω-hydroxy-polyoxyethylene] with a tetrahalogenoaurate(III) ion, or with silver(I)ion and a tatrahalogenoaurate(III) ion, to thereby form ultrafine gold particles or ultrafine gold-silver alloy particles; and, simultaneously, cross-linking polyethylene oxide (polyethylene oxide) included in the surfactant with. poly(vinyl alcohol) in the presence of the ultrafine gold particles or ultrafine gold-silver alloy particles acting as a catalyst, to thereby form a network-structured gel which is insoluble in water, with the ultrafine gold particles or ultrafine gold-silver alloy particles being maintained in the gel, the steps being carried out under gravity, microgravity, or non-gravity.

60. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described any one of in claims 40, 41, and 43 to 50, wherein the pore size and the thickness of the ultrathin film formed can be regulated by modifying the fed amounts of raw materials including poly(vinyl alcohol), a poly(vinyl alcohol)-polyethylene glycol mixture, silver(I) ion, a tetrahalogenoaurate(III) ion, and α,α'-[2,4,7,9-tetramethyl-5-undecene-4,7-diyl]bis[ω-hydroxy-polyoxyethylene], the temperature higher than the phase transition temperature and the rate of vaporizing water.

61. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described any one of in claims 40, 41, and 43 to 50, which allows passage of gas or liquid.

62. An ultrathin film or stretchable thread-like or string-like fiber filaments as recited in claim 49 or 50, which are capable of undergoing, under gravity, microgravity, or non-gravity, great swelling and shrinking reversibly in a short time by the mediation of a solvent (water, an organic compound, or a water-organic compound mixture).

63. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described any one of in claims 40, 41, and 43 to 50, which are capable of undergoing, under gravity, microgravity, or non-gravity, great swelling and shrinking reversibly in a short time by the mediation of a solvent.

64. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described in claim 63, which undergoes great swelling and shrinking reversibly in a short time by the mediation of a solvent caused by summation of the phenomenon that stretchable thread-like or string-like fiber filaments or an ultrathin film constituting the gel or gel thin film undergoes great swelling and shrinking reversibly in a short time by the mediation of a solvent.

65. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described any one of in claims 40, 41, and 43 to 50, wherein, in the swelling and shrinking under gravity, microgravity, or non-gravity, the swelling occurs greatly at high speed by absorbing water and the shrinking occurs greatly at high speed through dehydration caused by an organic solvent which is water-soluble and volatile.

66. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described in claim 65, wherein a gel or gel thin film which has been treated by water and a volatile organic solvent is heated in order to completely remove water and the organic solvent, thereby yielding a dry gel or gel thin film; subsequently, the gel or gel thin film reversibly undergoes great swelling and shrinking, thereby yielding a gel or gel film restored to an initial state (size and shape); and the factor of swelling is 50 times on the basis of weight.

67. An ultrafine (gold, silver, or gold-silver alloy)-particle-adsorbed poly(vinyl alcohol) thin film or an ultrafine (gold, silver, or gold-silver alloy)-particle- adsorbed poly(vinyl alcohol)-polyethylene glycol mixture thin film produced through reaction of, in the presence of a water-insoluble thin film obtained from poly(vinyl alcohol) or a poly(vinyl alcohol)-ethylene glycol mixture as a raw material, α,α'-[2,4,7,9-tetramethyl-5-undecene-4,7-diyl]bis[ω-hydroxy-polyoxyethylene] with silver(I) ion and/or a tetrahalogenoaurate(III) ion, to thereby form ultrafine gold particles or ultrafine gold-silver alloy particles; formation of a characteristic structure of the ultrafine gold particles or ultrafine gold-silver alloy particles formed in the vicinity of the thin film; and adsorption of the structured particles on the surface of the poly(vinyl alcohol) thin film or poly(vinyl alcohol)-polyethylene glycol mixture thin film.

68. An ultrafine-gold-particle-dispersed poly(vinyl alcohol) gel, an ultrafine-gold-silver-alloy-particle-dispersed poly(vinyl alcohol) gel, an ultrafine-gold-particle-dispersed poly(vinyl alcohol) gel thin film, or an ultrafine-gold-silver-alloy-particle-dispersed poly(vinyl alcohol) gel thin film as described any one of in claims 40, 41, and 43 to 50, an ultrafine gold-particle-adsorbed poly(vinyl alcohol) thin film as described in claims 51 to 57, or an ultrafine (gold, silver, or gold-silver alloy)-particle-adsorbed poly(vinyl alcohol)-polyethylene glycol mixture thin film as described in claim 67, which exhibits electric conductivity on a surface and/or a cross section thereof.

69. A polymer or a polymer hydrogel produced through reaction of a polymer having a vinyl alcohol moiety with a polymer having an ethylene oxide moiety in the presence of ultrafine gold-containing particles serving as a catalyst.

70. A method for producing a polymer or a polymer hydrogel comprising reacting a polymer having a vinyl alcohol moiety with a polymer having an ethylene oxide moiety in the presence of ultrafine gold-containing particles serving as a catalyst.
